# EUROPEAN PATENT APPLICATION

(11) **EP 4 818 286 A1**
(43) Date of publication of application: **07.10.2026**
(21) Application number: 25167382.8
(22) Date of filing: 31.03.2025
(51) Int. Cl.: C09K 5/06

(54) **EUTECTIC PHASE CHANGE MATERIAL COMPOSITION**

(71) Applicant: Cowa Thermal Solutions AG, 6039 Root D4 Luzern (CH)
(72) Inventor: O'Neill, Poppy Jayne Patricia Hurst, 6010 Kriens (CH); Ruckli, Yolanda, 6333 Hünenberg See (CH); Waser, Remo, 8038 Zürich (CH); Maranda, Simon Aaron, 6005 Luzern (CH)
(74) Representative: P&TS SA (AG, Ltd.)

(57) **Abstract**

The invention concerns a phase change material (PCM) composition, comprising a sodium acetate trihydrate (SAT) PCM component, and a eutectic component, being either a solvent comprising hydrogen bond donor sites positioned at a chelating distance ranging from 0.170 nm to 0.400 nm, or 200 nm to 350 nm to one another, said depressing solvent not being urea, acetamide or glycine, or a hydrated simple salt eutectic (HSSE). The invention further concerns a method for preparing PCM composition and a device comprising said composition.

## Description

### Technical domain

The present invention relates to phase change materials, specifically to a sodium acetate phase change material composition with a decreased melting point temperature. The invention also relates to a method for preparing such phase change compositions.

### Related art

Phase Change Materials (PCMs) are substances that absorb and release thermal energy through phase transitions, typically between solid and liquid states. During this process, they store or release a significant amount of energy in the form of latent heat, which is quantified by their enthalpy of fusion. This ability to maintain a nearly constant temperature while transitioning between phases makes PCMs highly effective for thermal management applications. Among various PCMs, salt hydrates, organic compounds, and eutectic mixtures are commonly used due to their thermal reliability and cost-effectiveness. The capacity to fine-tune the melting point and enthalpy of PCMs expands their usability across diverse industries, from energy storage and building insulation to medical and food preservation applications.

Sodium acetate trihydrate (SAT) is a widely used PCM due to its high latent heat capacity, non-toxicity, and cost-effectiveness. It is particularly advantageous in applications where supercooling and rapid crystallization are desired, such as reusable heat packs and thermal buffering systems.

However, SAT's relatively high melting point (~58°C) limits its application in scenarios requiring thermal regulation at lower temperatures. Lowering SAT's melting point would enhance its suitability for applications such as passive cooling in electronics, temperature-controlled food transport, and energy-efficient building materials. Additionally, modifying SAT to melt at a lower temperature could improve its effectiveness in medical therapies, where controlled heat release is beneficial for pain relief and muscle relaxation.

In heat pump systems, charging efficiency is strongly influenced by the temperature differential between the heat source, for example ambient air, and the heat sink, i.e. the thermal storage. SAT PCMs which are commonly used in such systems, require charging temperatures above 58°C to fully transition to their liquid state. Since domestic hot water is typically used at 35°C to 40°C, a melting point of the PCM at a lower temperature, for example around 45°C, would therefore be sufficient to meet end-user requirements. By lowering the melting temperature of the heat storage material the energy demand of these systems could be reduced and the overall efficiency increased. An SAT PCM with a reduced melting temperature would also be of particular interest for heat pumps which are unable to reach temperatures of 58°C.

It is known from the state of the art that urea, glycine and acetamide can each reduce the melting point of SAT PCM, effectively lowering its melting point. Each of these eutectic mixtures exhibits distinct thermal characteristics, including specific melting points and melting behaviours, which influence their suitability for different applications.

While these known eutectic systems provide valuable options for modifying SAT's phase transition properties, the range of available eutectic agents, remains limited. Some of the eutectic agents known in the prior art are chemically not stable in SAT PCMs, such as urea, while others suffer from poor crystallization, such as glycine. When used in heat exchangers it is also important that the eutectic agents are not corrosive to avoid damage to these devices.

Expanding the selection of compatible eutectic agents would enable greater flexibility in tailoring SAT-based PCMs to meet the precise thermal requirements of diverse applications, such as medical therapies, electronic cooling, and energy-efficient building materials. Developing new eutectic compositions with tuneable melting points would enhance the adaptability of SAT PCMs, ensuring optimal performance across a broader range of temperature-sensitive applications.

### Short disclosure of the invention

It is an aim of the present invention to provide a method to adjust the melting point (Tₘ) of SAT phase change material to enable use in applications requiring thermal regulations at temperatures below 58°C.

It is another aim of this invention to expand on the palette of available eutectic agents to allow for a better adjustment of the SAT PCM material to specific applications.

It is yet another aim of this invention to improve the charging efficiency of heat pumps, in particular heat pumps used for domestic hot water supply.

It is yet another aim of this invention to provide alternatives for adjusting the thermal behaviour of SAT PCM compositions to the solutions known in the state of the art.

According to the invention, one or more of these aims are attained by the object of the attached claims and in particular by the independent claims. The dependent claims concern further advantageous embodiments of this invention.

Specifically, at least one of the aims above is attained by a phase change material (PCM) composition, comprising an acetate trihydrate PCM component and a eutectic component. The acetate trihydrate phase change material (PCM) component is a cation acetate trihydrate (CAT) PCM component, for example a sodium acetate trihydrate (SAT) PCM component, a copper acetate trihydrate (CuAT) PCM component, or a methylammonium acetate trihydrate (MAAT) PCM component.

The eutectic component is either a eutectic solvent having two hydrogen bond donor sites spaced at a distance, also referred to as the chelating distance, of 0.170 to 400nm, or 0.200nm to 0.370nm, or a hydrated simple salt eutectic (HSSE) present at a eutectic concentration.

The PCM composition may comprise 20wt.% to 80wt%, preferably from 35wt.% to 55wt.% of the CAT PCM component. The salt may be provided in its anhydrous form for the preparation of the composition.

The eutectic solvent of this invention is not any one of urea, acetamide, or glycine.

The eutectic solvent may be selected from a group consisting of TRIS (Tris(hydroxymethyl)aminomethane), 1,1,1,TRIS (1,1,1-Tris(hydroxymethyl)-ethane), Erythritol, Propylene glycol, Tartaric acid, Bicine (N,N-Bis-(2-hydroxyethyl)-glycine), Tricine (N-[Tris-(hydroxymethyl)-methyl]-glycin), Glycylglycin (Gly-Gly), Ethylene glycol (1,2-Ethandiol), HEPES (4-(2-Hydroxyethyl)piperazine-1-ethanesulfonic acid), D-Sorbitol, Citric acid, Gallic acid, Caffeic acid, Allantoin, Sodium gluconate , N-Methyl-D-glucamine, L-Serine], Xylose, Maltose.

The solvents listed above were chosen on the basis of their low toxicity and reduced environmental impact, in particular when released in aqueous systems. The invention is however not limited to these specific examples. Other solvents, which also provide the chelating distance between hydrogen bond donor sites, may also be used as eutectic solvents in the CAT PCM composition.

The eutectic solvent provided in the composition may be described as a deep eutectic solvent (DES).

DES are solutions of Lewis/Bronsted acids and bases which form a eutectic mixture. The initial parent solutions engage in complex hydrogen bonding which results in significant freezing point depression compared to either one of the parent compounds.

The eutectic solvents provided in the composition of this invention each comprise two hydrogen bond donors. It is speculated that these hydrogen bond donors form hydrogen bridge bonds with the acetate molecule in the CAT component. The solvents thus act as chelators for the CAT component.

It was found that solvents having hydrogen bond donors positioned at a chelating distance of 0.170 to 400nm, or 0.200nm to 0.370nm from one another are particularly suited to lower the melting temperature of the CAT whilst maintaining an excellent latent heat storage capacity of the PCM composition.

Solvents with hydrogen bond donors positioned at a greater distance were found not to be suitable as eutectic solvents for the CAT component.

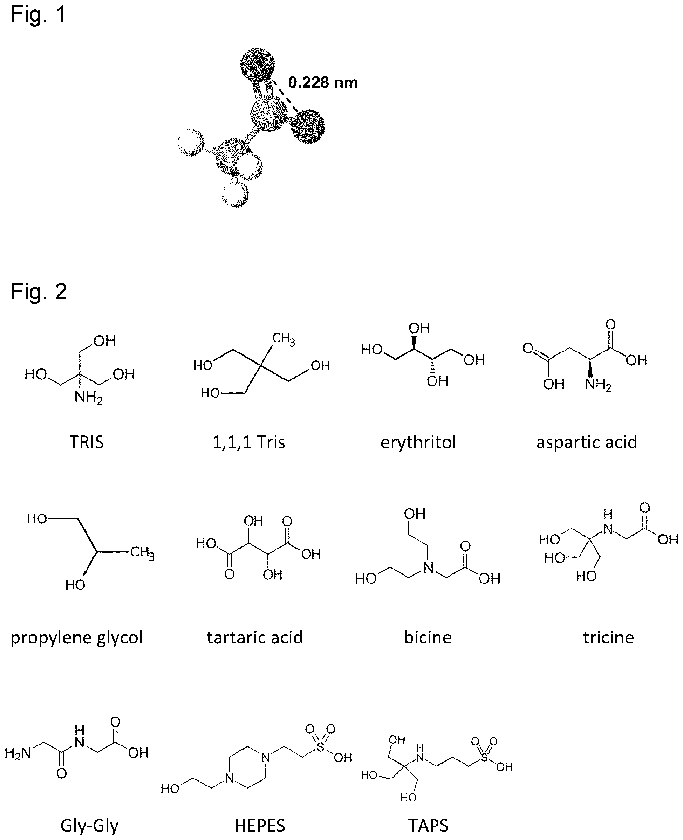

The acetate molecule of the CAT component comprises two hydrogen bond acceptor sites in its carboxyl group, which are positioned at a distance of 0.288nm from one another (Figure 1). It is speculated that the distance between these two hydrogen bond acceptors of the acetate molecule define the suitability of the eutectic solvent for the CAT component. In other words, the chelating distance of the eutectic solvent must be within a suitable range to allow the formation of two hydrogen bridges between the carboxyl group of the acetate molecule and the hydrogen bond donor sites of the solvent.

In one embodiment eutectic solvent is present in the composition at a concentration which is close to the eutectic point of the composition, i.e. close to its eutectic concentration.

In one embodiment HSSE is present in the composition at a concentration which is close to the eutectic point of the composition, i.e. close to its eutectic concentration.

A deviation from the eutectic concentration of about 20%, or of about 10%, or of about 5% is considered to be close to the eutectic concentration. Preferably, the eutectic solvent is present at its eutectic concentration.

Generally the stability increases the closer the concentration of the eutectic component comes to the eutectic concentration, i.e. the eutectic point of the composition. An optimal stability of the CAT PCM composition is reached at the eutectic point.

In one embodiment the CAT PCM composition comprises 20wt.% to 30wt%, for example 25wt.% TRIS as eutectic solvent.

In one embodiment the CAT PCM composition comprises 25wt.% to 35wt.%, for example 30wt.% 1,1,1 TRIS as eutectic solvent.

In one embodiment the CAT PCM composition comprises 35wt.% to 45wt.%, for example 40wt.% Erythritol as eutectic solvent.

In one embodiment the CAT PCM composition comprises 20wt.% to 35wt.%, for example 30wt.% Propylene glycol as eutectic solvent.

In one embodiment the CAT PCM composition comprises 15wt.% to 30wt.%, for example 24% Bicine as eutectic solvent.

In one embodiment the CAT PCM composition comprises 5wt.% to 30wt.%, for example 20wt.% Tricine as eutectic solvent.

In one embodiment the CAT PCM composition comprises 5wt.% to 25wt. %, for example 20wt.% Gly-Gly as eutectic solvent.

In one embodiment the CAT PCM composition comprises 15 wt.% to 25 wt.%, for example 20 wt.% HEPES as eutectic solvent.

The hydrated simple salt eutectic (HSSE) may be KNO₃, KH₂PO₄, K₂HPO₄, K₃PO₄, NH₄, NH₄NO₃, NH₄H₂PO₄, (NH₄)₂HPO₄, (NH₄)₃PO₄, NaNO₃, NaH₂PO₄, Na₂HPO₄, Na₃PO₄. A combination of HSSEs may be present in the CAT PCM composition. The HSSE may also be LiNO₃, LiH₂PO₄, Li₂HPO₄, Li₃PO₄, or a combination thereof. However, these salts are less preferred, as they are highly toxic. To minimize an adverse impact on environment and on health, potassium and ammonium salt according to this invention are therefore preferable.

The HSSE is provided in a eutectic concentration in the CAT PCM composition.

Salts can act as melting point depressing agents outside their eutectic concentration. However, the addition of the salts renders the PCM composition unstable and unsuitable for repeated cycling. The anhydrous salt of the PCM component precipitates resulting in a change of the thermal profile and cycling behaviour. Commonly, thickening agents are added to alleviate the effects of the destabilised PCM compositions.

It was found that if salts are provided in eutectic concentrations to the CAT PCM composition, i.e. at the eutectic point, melting point depression of the CAT PCM composition was achieved without introducing instability. The eutectic CAT PCM comprising the HSSE in eutectic concentrations exhibited flat and sustained temperature plateaus during melting and crystallization, which were extremely stable over at least 33 cycles.

The eutectic concentrations of the different HSSEs depend on their nature and the CAT PCM composition.

In one embodiment the PCM composition is an SAT PCM composition and the HSSE is potassium nitrate (KNO₃) present at 10wt.% to 11wt.%, for example at 10.5wt.%.

In one embodiment the PCM composition is an SAT PCM composition and the HSSE is sodium nitrate (NaNO₃) present at 10.5wt.% to 11.2wt.%, for example at 10.9wt.%.

To further increase stability and reduce the risk of segregation of the CAT PCM composition of this invention, stabilising polymers may be added.

In one embodiment such stabilising polymer is a polymer having the general formula 1 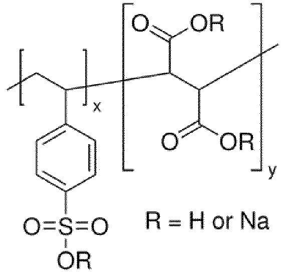 wherein R is either hydrogen or sodium,
or a general formula 2 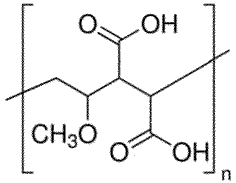 or a general formula 3 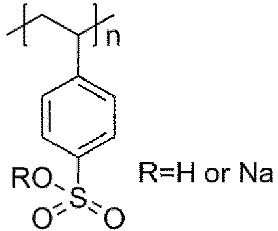 wherein R is either hydrogen or sodium.

A polymer having the general formula 1 is a poly(4-styrenesulfonic acid-co-maleic acid), also referred to as P4SSA-co-MA or P4SSA.

A polymer having the general formula 2 is a poly(methyl vinyl ether-alt-maleic acid), also referred to as PMVEMA.

A polymer having the general formula 3 is a polystyrene sulfonic acid or a polystyrene sulfonate, also referred to as PSS.

The composition may comprise a mixture of these polymers.

The stabilising polymers mentioned above reduce or prevent the formation and precipitation an anhydrous salt, such as sodium acetate (SA) in the case of SAT, in the composition, thereby avoiding segregation of the salt hydrate PCM solution. The polymers thus avert the formation or non-homogenous liquid in the aqueous composition, and as a result reduce or prevent incongruous melting behavior of the PCM composition.

Additionally or alternatively, the PCM composition may comprise other stabilising polymers known in the art, at typical concentrations known to the skilled person.

The total amount of one or more stabilising components present in the PCM composition may be 0.5wt.% to 10wt.%, or 1wt.% to 4wt.% of the composition.

To avoid supercooling of the liquid phase, nucleation promoters may be provided in the PCM composition. Suitable nucleation promoters may be compounds known in the art, such as disodium hydrogen phosphate (DSP) and hydrated forms thereof, sodium hydroxide (NaOH), titanium dioxide (TiO₂) and/or tetrasodium pyrophosphate (TSPP) and hydrated forms thereof.

The composition may comprise a combination of different nucleation promoters.

Each nucleation promoter may be independently present at 0.1wt.% to 10wt.%, preferably at 0.5wt.% to less than10 wt.% of the composition. The total amount of polymer preferably ranges from 0.5wt.% to 10wt.%, preferably from 1wt.% to 5wt.%.

DSP acts as a nucleation promoter when provided at concentration from 0.5wt.% to 15wt.%, to an SAT PCM composition.

Titanium dioxide (TiO₂) is a particularly efficient nucleation promoter when added to a PCM composition together with a negatively charged stabilising polymer, such as the above-mentioned polymers, suitable for reducing or preventing the formation of anhydrous PCM precipitate. TiO₂ may be provided as nanoparticles or in any other form. Different forms of TiO₂ may be provided in combination.

In one embodiment the CAT PCM composition comprises thermo-conductive particles to improve the thermal conductivity of the PCM composition, resulting in a more efficient thermal charging and discharging of the composition. The thermo-conductive particles may for example be graphite flakes. They may also be made of another thermally conductive material. The thermo-conductive particles may for example be metal-based particles. The thermo-conductive particles act as filler particles in the PCM composition when combined with expanded graphite.

Graphite flakes are particularly advantageous as they are more lightweight than metal-based conductive particles, such as copper and aluminium particles, while having a comparable or better value of thermal conductivity. Moreover, based on the non-poisonous nature of graphite, using graphite flakes as thermo-conductive particles allows for the production of non-toxic PCM compositions.

Alternatively or additionally, the PCM composition may comprise expanded graphite material. Expanded graphite, also called exfoliated graphite, offers significant advantages due to its thermal conductivity, which is more than 100 times higher than that of the original graphite. This exceptional property makes it highly effective in enhancing the thermal exchange process.

The expanded graphite material, as well as the thermo-conductive particles are both thermally conductive and therefore also jointly referred to as thermally conductive components.

In one embodiment the expanded graphite material has a mean particle size of 5 µm to 2000 µm, of 10µm to 1500 µm, or of 20 µm to 1200 µm, or of 50 µm to 600 µm. Expanded graphite material of this type is particularly suited for forming a porous network in the CAT PCM composition.

In one embodiment the CAT PCM composition comprises of 5wt.% to 12wt.%, for example 6wt % to 9wt.% of expanded graphite. It was found that expanded graphite within this range formed a stable graphite network in the sodium acetate trihydrate (SAT) PCM composition. It is expected that these concentrations are equally suited for the formation of a stable network in other salt-hydrate PCM compositions. The same range of concentrations is further expected to be suited for organic PCM compositions.

In one embodiment the thermo-conductive particles have a mean size no larger than 700 µm, for example a mean size of 30 µm to 500 µm, or of 40 µm to 100 µm, or of 40 µm to 50 µm. It was found that the combination of expanded graphite with thermo-conductive particles, such as graphite flakes, drastically increased the thermal conductivity. The amount of increase was dependent on the particle size of both, the expanded graphite and the thermo-conductive particles, in this case graphite flakes. The relative sizes of these particles to one another influenced the amplification factor of the measured thermal conductivity over the thermal conductivity values obtained for expanded graphite PCM compositions without the thermo-conductive particles. Generally, increases of 2 to 4.5 times of thermal conductivity were achieved by adding graphite flakes to an SAT PCM composition comprising expanded graphite.

Expanded graphite with a mean particle size of 5 µm showed little or no increase in thermal conductivity of the PCM composition when graphite flakes ranging from 44µm to 500µm were added. It is therefore thought that a minimum particle size of the expanded graphite is required to enable the synergistic enhancement of its thermal conductivity using thermo-conductive particles.

Without wishing to be bound by any particular hypothesis, it is postulated that the network formed by the expanded graphite in the PCM solution provides for pores and cavities in which the thermo-conductive particles can enter to form conductive bridges within these pores or cavities, thus amplifying the thermal conductivity and as a result the thermal conductivity of the expanded graphite network. In other words, it is postulated that the thermo-conductive particles are adsorbed by the expanded graphite network to boost the network's conductivity. The expanded graphite network basically provides a scaffold into which the thermo-conductive particles penetrate to form additional conductive pathways within the expanded graphite material.

The CAT PCM composition of this invention has a melting temperature below the natural melting temperature of the cation acetate trihydrate component. In case of SAT the natural melting temperature is 58°C. The melting temperature is adjusted by adding the eutectic components of this invention to the composition, wherein the melting temperature can be tuned by adjusting the concentration and the type of eutectic component present in the PCM composition. The PCM composition may have a melting temperature of less than 54°C, for example 40°C to 54°C, for example 45°C.

In one embodiment the PCM composition is a water polymerized hydrogel composition.

SAT hydrogel PCM compositions and their production are known in the art. The SAT hydrogel composition may for example be produced according to Xiao Qiangqiang et al (Xiao Qiangqiang et al; Energy 165 (2018): 1240-1247) or according to Liu Xingru et al (Liu Xingru et al ; Solar Energy Materials and Solar Cells 268 (2024): 112754).

This first publication describes the production of an SAT PCM hydrogel using anhydrous sodium acetate, disodium hydrogen phosphate as nucleating agent, and aluminium oxide (325 mesh) as gelling material. Second publication uses sodium acetate trihydrate, N-N-methylene bisacrylamide as cross-linking agent, sodium dihydrogen phosphate dihydrate as nucleating agent, sodium acrylate as monomer 1 and sodium alginate as monomer 2, calcium chloride was used as an initiator.

Alternative methods for producing an SAT PCM may also be suitable for eutectic PCM compositions of this invention.

The invention thus provides for specific eutectic components which permit to alter the melting temperature of a CAT PCM composition whilst maintaining the specific enthalpy of the PCM, as will be shown in the subsequent sections.

It thus opens the door for a plethora of applications which require heat exchange at temperatures below the natural melting temperature of SAT PCM, which is 58°C.

### Short description of the drawings

Exemplar embodiments of the invention are disclosed in the description and illustrated by the drawings in which
**Figure 1** shows a molecular model of acetate molecule of the SAT with hydrogen bond acceptor sites (A1, A2) indicated by an arrow;
**Figure 2** shows structural formulas of the eutectic solvent components of the PCM composition of this invention;
**Figures 3A to 3F** show test results for an SAT PCM composition always containing a ratio of sodium acetate to deionised water of 60.3:39.7, with TRIS being present from 5wt.% to 45wt% as a eutectic solvent component, as indicated, wherein

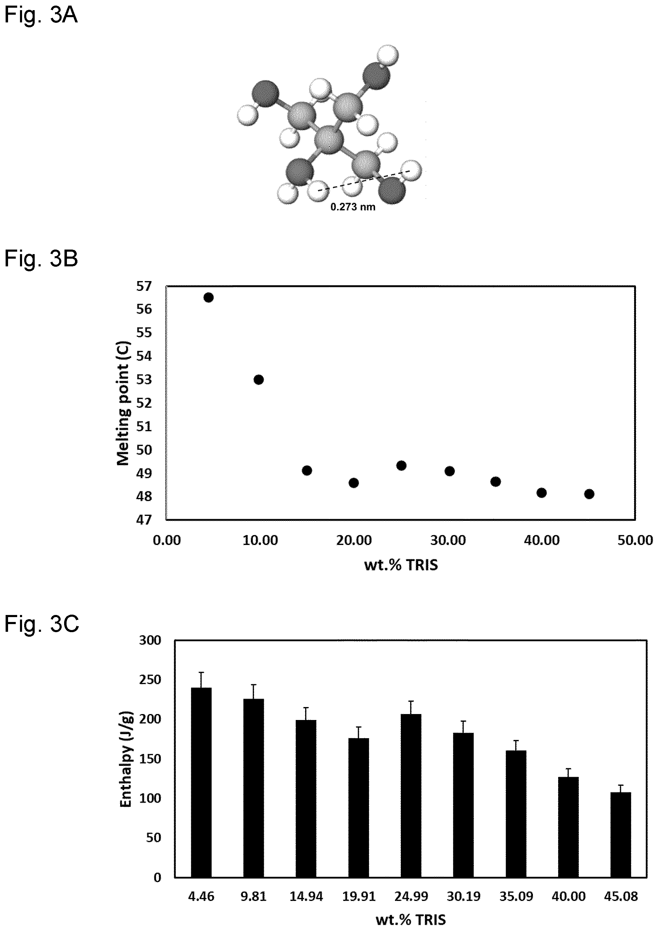

**Figure 3A** shows a molecular model of TRIS indicating the chelating distance between the hydrogen bond donor sites;
**Figure 3B** shows the melting point depression of the eutectic SAT composition in dependence of TRIS concentration;
**Figure 3C** shows the enthalpy of the eutectic SAT composition in dependence of TRIS concentration;

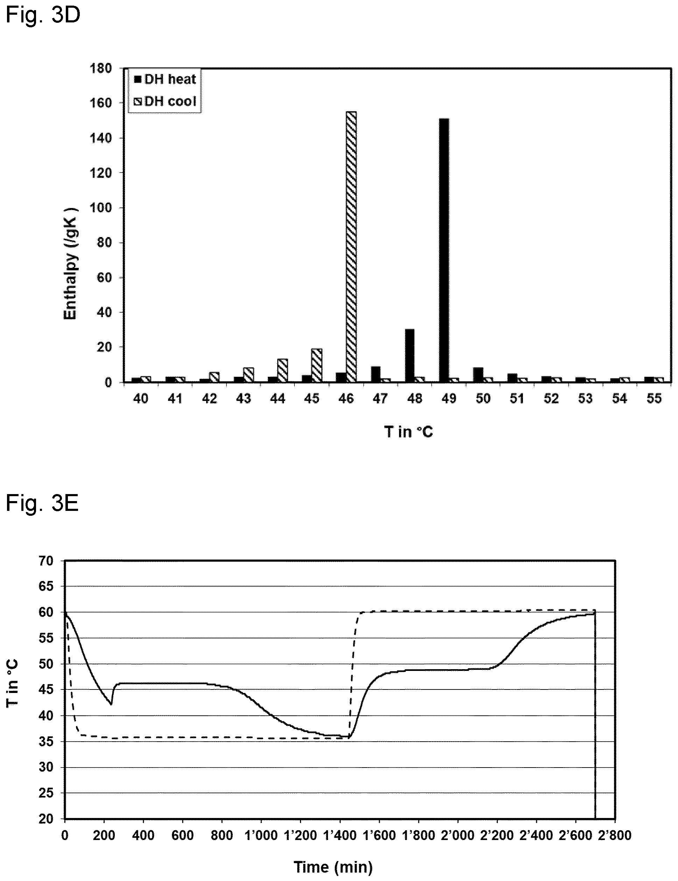

**Figures 3D** and **3E** show 3 layer calorimetric measurements and specific heat capacity in J/(g K) results for a PCM composition consisting of 45.2wt.% sodium acetate, 29.8wt.% deionised water and 25wt.% TRIS., with Figure 3D showing a bar chart of the changes in enthalpy in during heating (black bars) and cooling (striped bars) and with Figure 3E showing the corresponding temperature profile of the SAT TRIS PCM composition during heating (solid line) and cooling (dashed line);

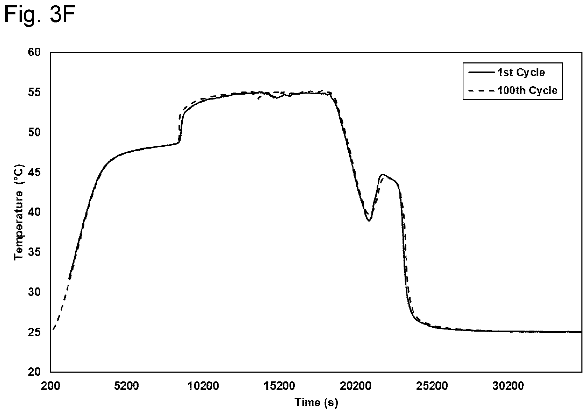

**Figures 3F** shows how heat curves of an SAT PCM composition comprising 42.4wt.% sodium acetate, 30.8wt.% H2O, 25wt.% TRIS and 2wt.% DSP (as a nucleation promoter)25wt.% TRIS and 2wt.% DSP (as a nucleation promoter) subjected to thermal cycling showing the overlay of the first cycle and the 100^{th} cycle;

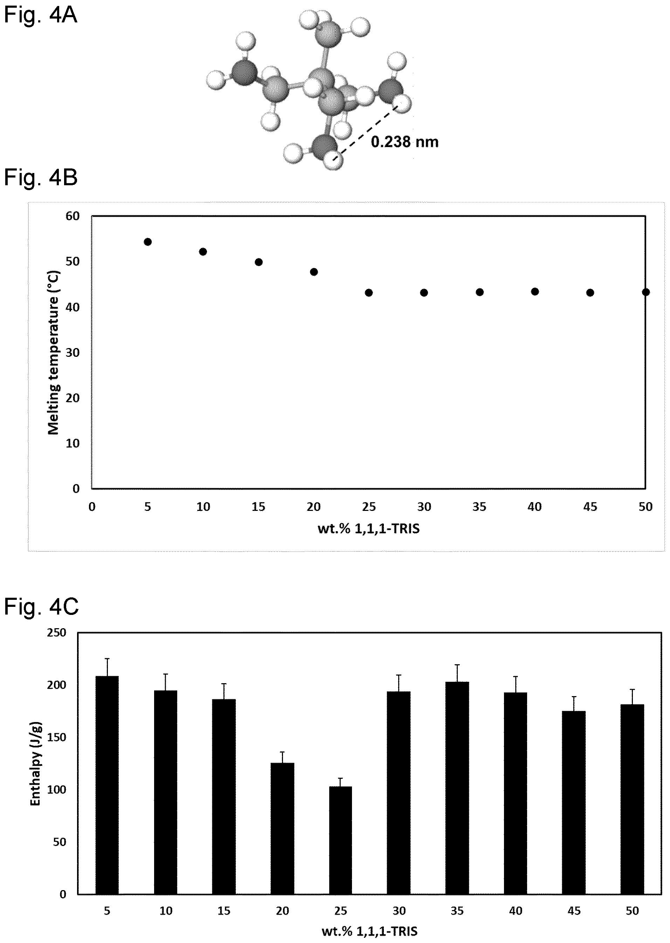

**Figures 4A to 4C** show test results for an SAT PCM composition always containing a ratio of sodium acetate to deionised water of 60.3:39.7, with 1,1,1 Tris being present from 5wt.% to 50wt%as a eutectic solvent component, as indicated, wherein
**Figure 4A** shows a molecular model of 1,1,1 Tris indicating the chelating distance between the hydrogen bond donor sites;
**Figure 4B** shows the melting point depression of the eutectic SAT composition in dependence of 1,1,1 Tris concentration;
**Figure 4C** shows the enthalpy of the eutectic SAT composition in dependence of 1,1,1 Tris concentration;

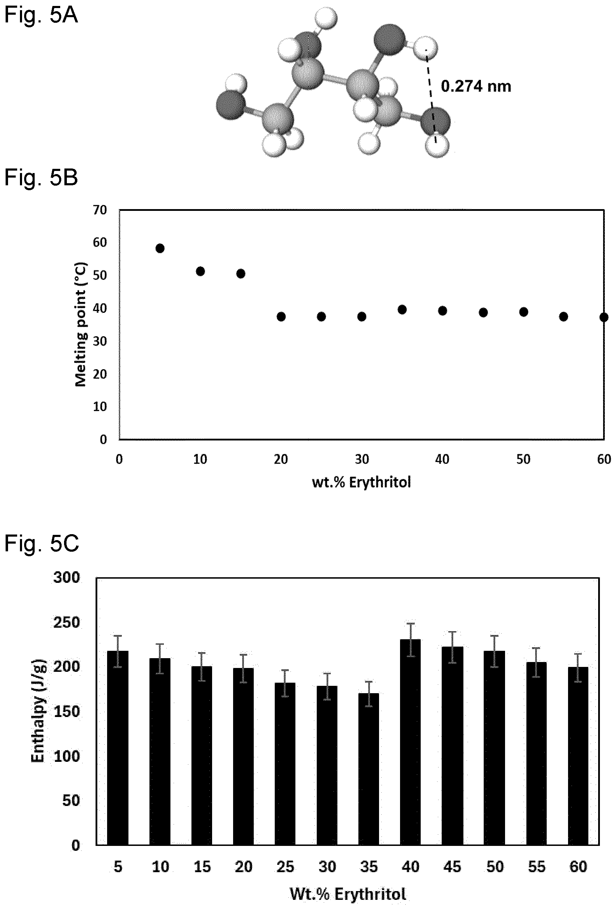

**Figures 5A to 5C** show test results for an SAT PCM composition always containing a ratio of sodium acetate to deionised water of 60.3:39.7, with erythritol being present from 5wt.% to 60wt%wt.%as a eutectic solvent component, as indicated, wherein
**Figure 5A** shows a molecular model of erythritol indicating the chelating distance between the hydrogen bond donor sites;
**Figure 5B** shows the melting point depression of the eutectic SAT composition in dependence of erythritol concentration;
**Figure 5C** shows the enthalpy of the eutectic SAT composition in dependence of erythritol concentration;

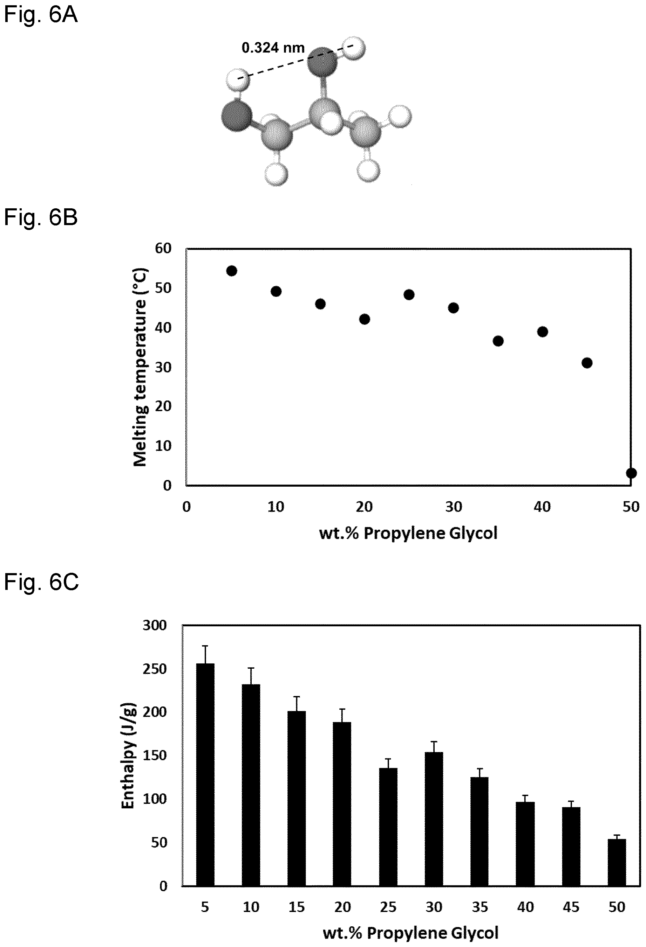

**Figures 6A to 6C** show test results for an SAT PCM always containing a ratio of sodium acetate to deionised water of 60.3:39.7, with propylene glycol being present at 5wt.% to 50wt%wt.%as a eutectic solvent component, as indicated, wherein
**Figure 6A** shows a molecular model of propylene glycol indicating the chelating distance between the hydrogen bond donor sites;
**Figure 6B** shows the melting point depression of the eutectic SAT composition in dependence of propylene glycol concentration;
**Figure 6C** shows the enthalpy of the eutectic SAT composition in dependence of propylene glycol concentration;

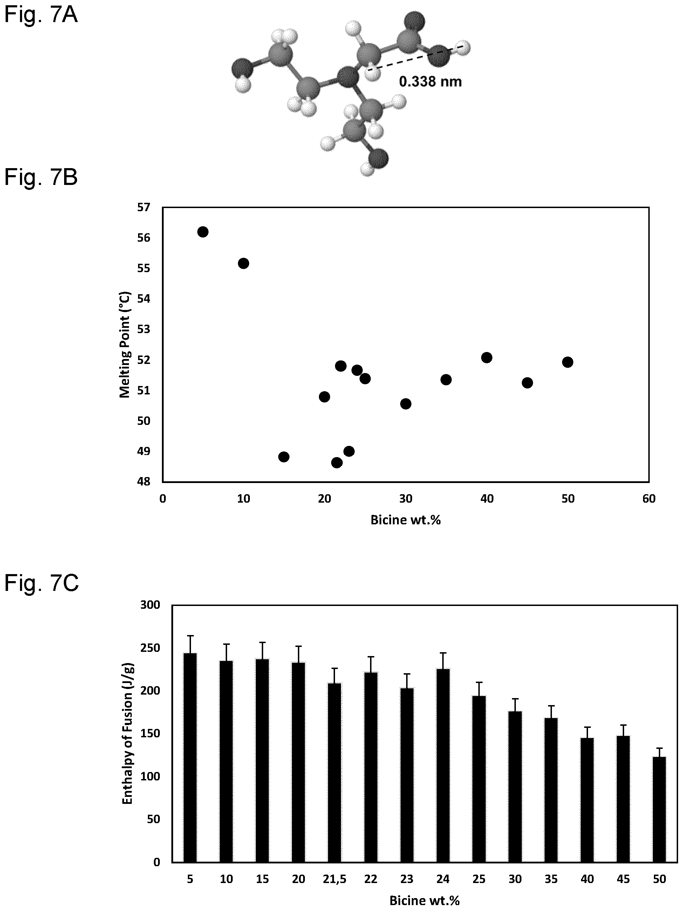

**Figures 7A to 7E** show test results for an SAT PCM composition always containing a ratio of sodium acetate to deionised water of 60.3:39.7, with bicine being present at 5wt.% to 50wt%as a eutectic solvent component, as indicated, wherein
**Figure 7A** shows a molecular model of bicine indicating the chelating distance between the hydrogen bond donor sites;
**Figure 7B** shows the melting point depression of the eutectic SAT composition in dependence of bicine concentration;
**Figure 7C** shows the enthalpy of the eutectic SAT composition in dependence of bicine concentration;

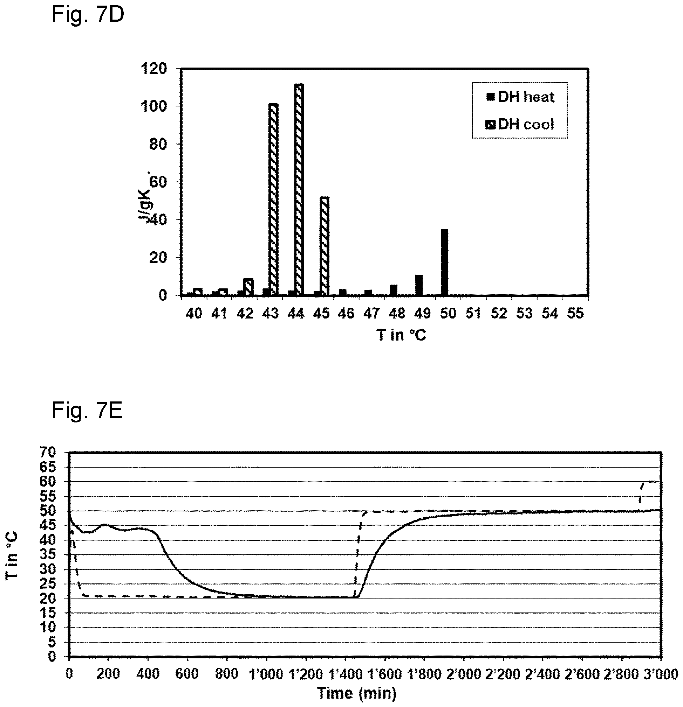

**Figures 7D** and **7E** show 3D layer calorimetric measurements and specific heat capacity in J/(g K) results for a PCM composition consisting of 45.8wt.% sodium acetate, 30.2wt.% deionised water and 24wt.% Bicine, with Figure 7D showing a bar chart of the changes in enthalpy in during heating (black bars) and cooling (striped bars) and with Figure 7E showing the corresponding temperature profile of the SAT bicine PCM composition during heating (solid line) and cooling (dashed line);

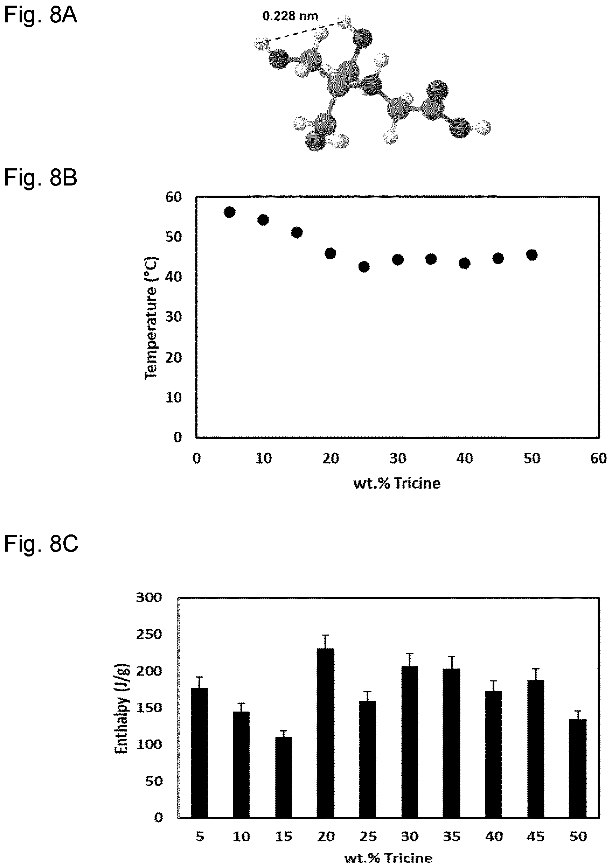

**Figures 8A to 8C** show test results for an SAT PCM composition always containing a ratio of sodium acetate to deionised water of 60.3:39.7, with tricine being present at 5wt.% to 50wt%as a eutectic solvent component, as indicated, wherein
**Figure 8A** shows a molecular model of tricine indicating the chelating distance between the hydrogen bond donor sites;
**Figure 8B** shows the melting point depression of the eutectic SAT composition in dependence of tricine concentration;
**Figure 8C** shows the enthalpy of the eutectic SAT composition in dependence of tricine concentration;

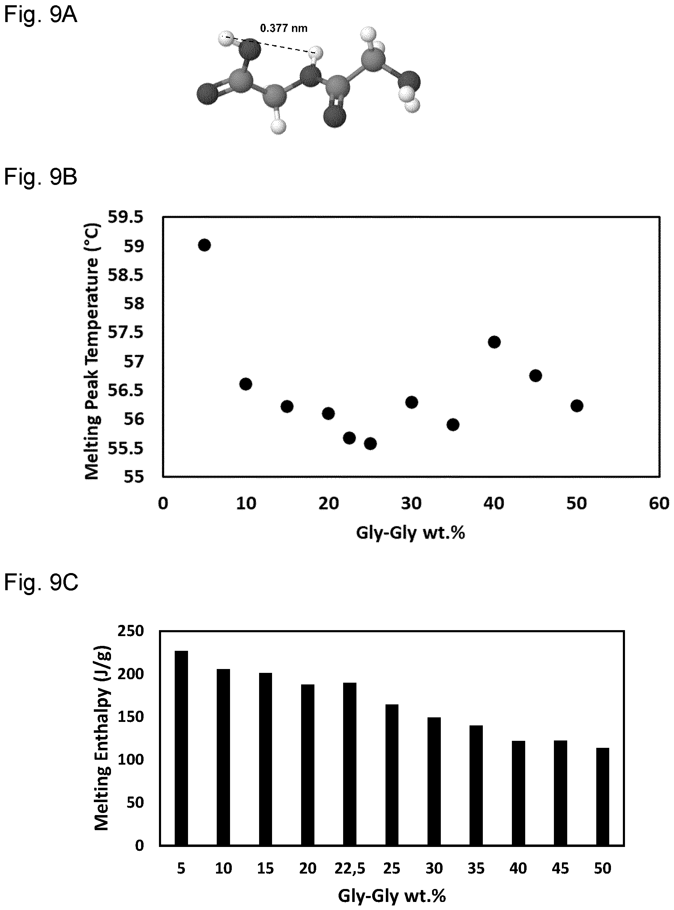

**Figures 9A to 9I** show test results for an SAT PCM composition always containing a ratio of sodium acetate to deionised water of 60.3:39.7, with glycylglycine (Gly-Gly) being present at 5wt.% to 50wt%as a eutectic solvent component, as indicated, wherein
**Figure 9A** shows a molecular model of Gly-Gly indicating the chelating distance between the hydrogen bond donor sites;
**Figure 9B** shows the melting point depression of the SAT composition comprising SAT in dependence of Gly-Gly concentration;
**Figure 9C** shows the enthalpy of the SAT Gly-Gly mixtures with 5-50wt.% of Gly-Gly (95-50 wt.% SAT PCM solution whereby the ratio of the SA and water in the SAT PCM solution is 60.3:39.7 respectively).

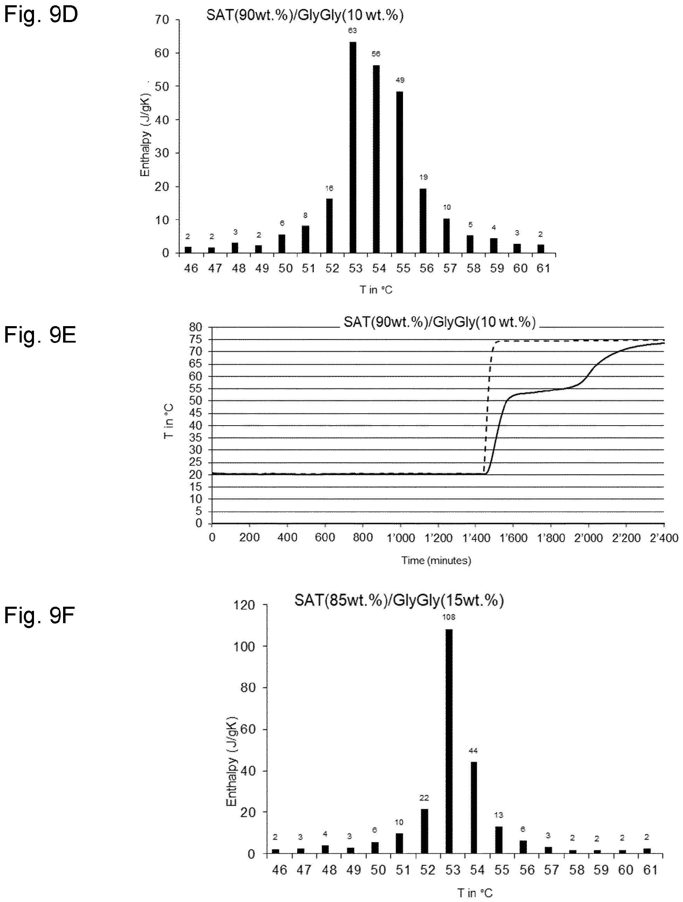

**Figures 9D to 9I** show 3D layer calorimetric measurements and specific heat capacity in J/(g K) results for an SAT PCM composition comprising the indicated concentrations of SAT PCM solution and Gly-Gly, with
**Figure 9D** showing a bar chart of the changes in enthalpy of a composition containing 90wt.% SAT PCM solution and 10wt.% Gly-Gly during heating (black bars) and cooling (striped bars) and with
**Figure 9E** showing the corresponding temperature profile of the SAT Gly-Gly PCM composition during heating (solid line) and cooling (dashed line);

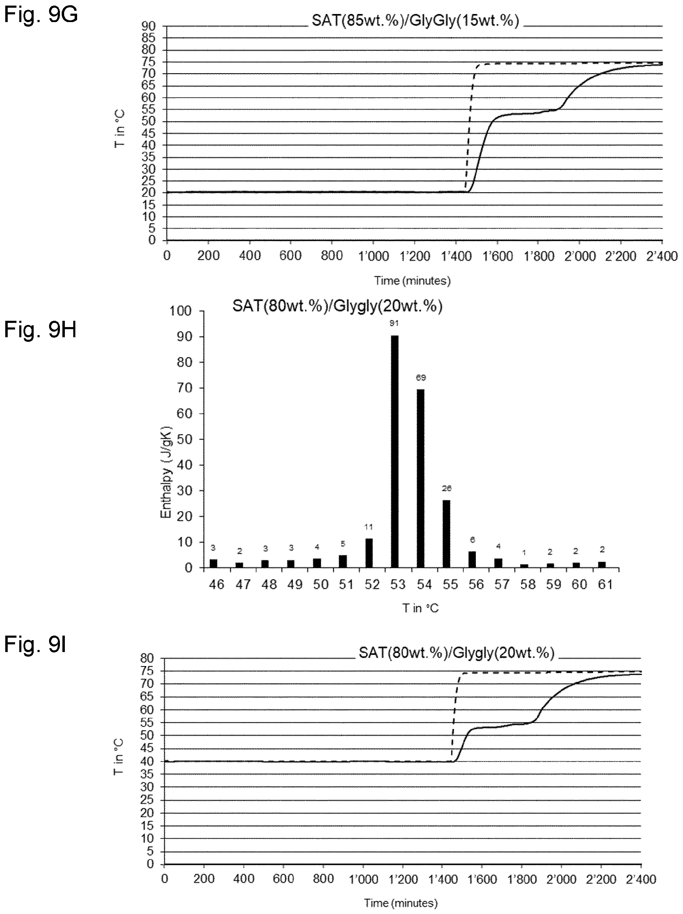

**Figure 9F** showing a bar chart of the changes in enthalpy of a composition containing 85wt.%SAT PCM solution and 15wt.%Gly-Gly during heating (black bars) and cooling (striped bars) and with **Figure 9G** showing the corresponding temperature profile of the SAT Gly-Gly PCM composition during heating (solid line) and cooling (dashed line);
**Figure 9H** showing a bar chart of the changes in enthalpy of a composition containing 80wt.%SAT PCM solution and 20wt.% Gly-Gly in during heating (black bars) and cooling (striped bars) and with
**Figure 9I** showing the corresponding temperature profile of the SAT Gly-Gly PCM composition during heating (solid line) and cooling (dashed line);

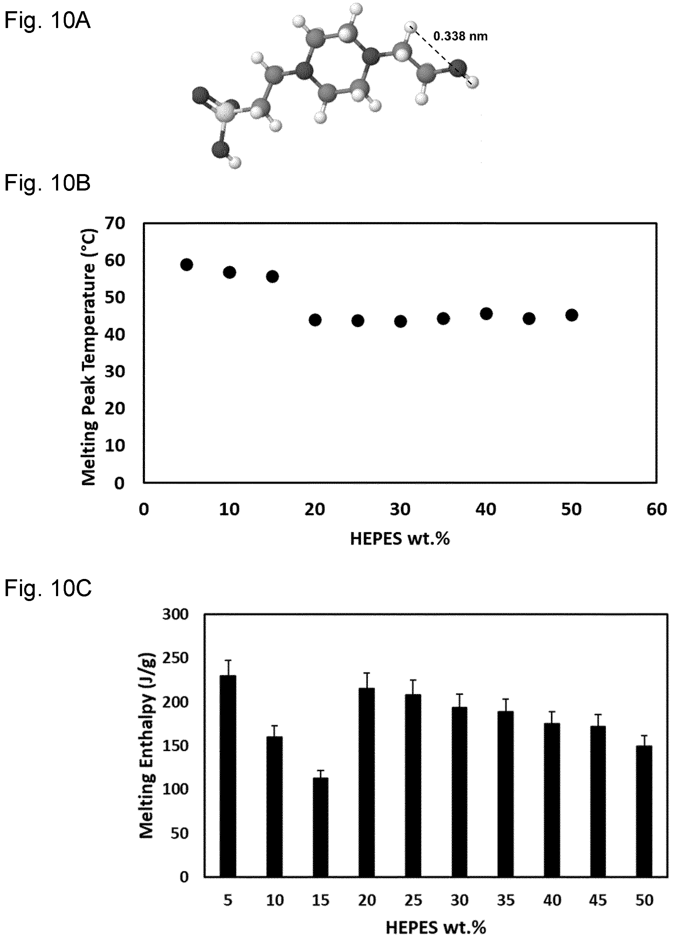

**Figures 10A to 10E** show test results for an SAT PCM composition always containing a ratio of sodium acetate to deionised water of 60.3:39.7, with HEPES being present at 5wt.% to 50wt% as a eutectic solvent component, as indicated, wherein
**Figure 10A** shows a molecular model of HEPES indicating the chelating distance between the hydrogen bond donor sites;
**Figure 10B** shows the melting point depression of the SAT composition comprising SAT in dependence of HEPES concentration;
**Figure 10C** shows the enthalpy of the SAT HEPES mixtures with 5-50wt.% of HEPES (95-50 wt.% SAT PCM solution whereby the ratio of SA and deionised water in the SAT PCM solution is 60.3_39.3 respectively);

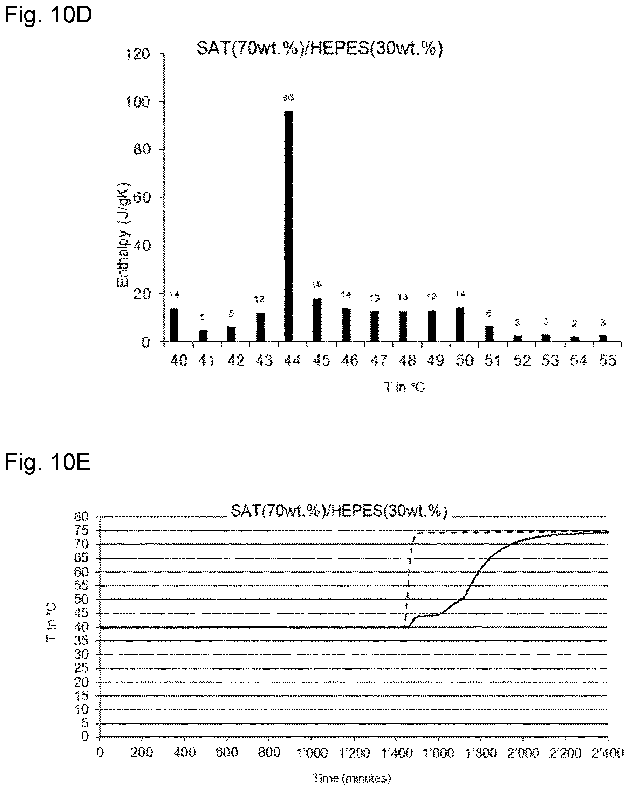

**Figure 10D** shows a bar chart of the changes in enthalpy of a composition consisting of 42.2wt.% of sodium acetate, 27.8wt.% of deionised water and 30wt.% HEPES during heating (black bars) and cooling (striped bars) and with **Figure 10E** showing the corresponding temperature profile of the SAT HEPES PCM composition during heating (solid line) and cooling (dashed line);

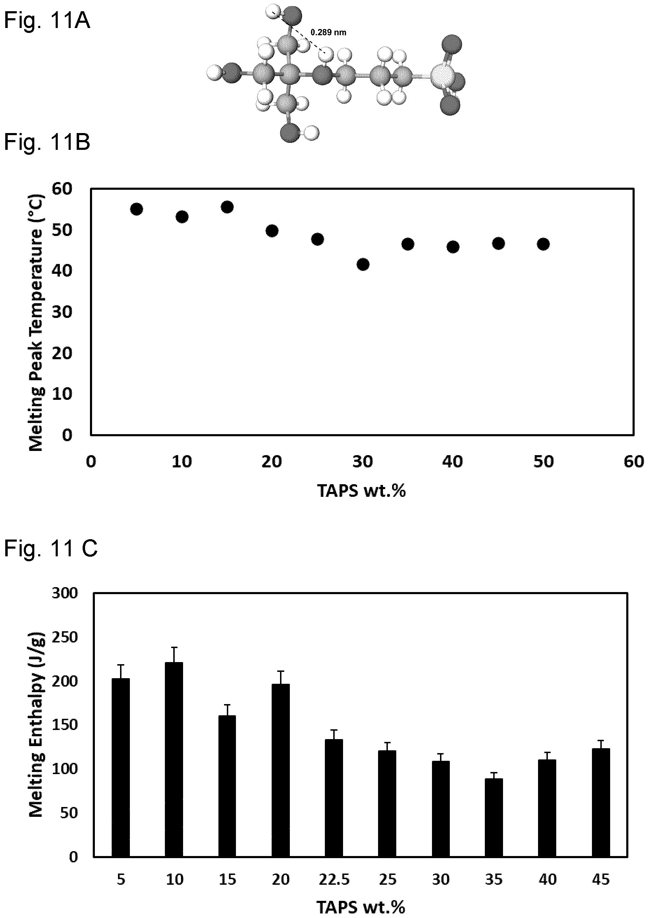

**Figures 11A to 11C** show test results for an SAT PCM composition always containing a ratio of sodium acetate to deionised water of 60.3:39.7, with TAPS being present at 5wt.% to 50wt% as a eutectic solvent component, as indicated, wherein
**Figure 11A** shows a molecular model of TAPS indicating the chelating distance between the hydrogen bond donor sites;
**Figure 11B** shows the melting point depression of the SAT composition comprising SAT in dependence of TAPS concentration;
**Figure 11C** shows the enthalpy of the SAT HEPES mixtures with 5-50wt.% of TAPS (95-50 wt.% SAT PCM solution whereby the ratio of SA and deionised water in the SAT PCM solution is 60.3:39.7 respectively);

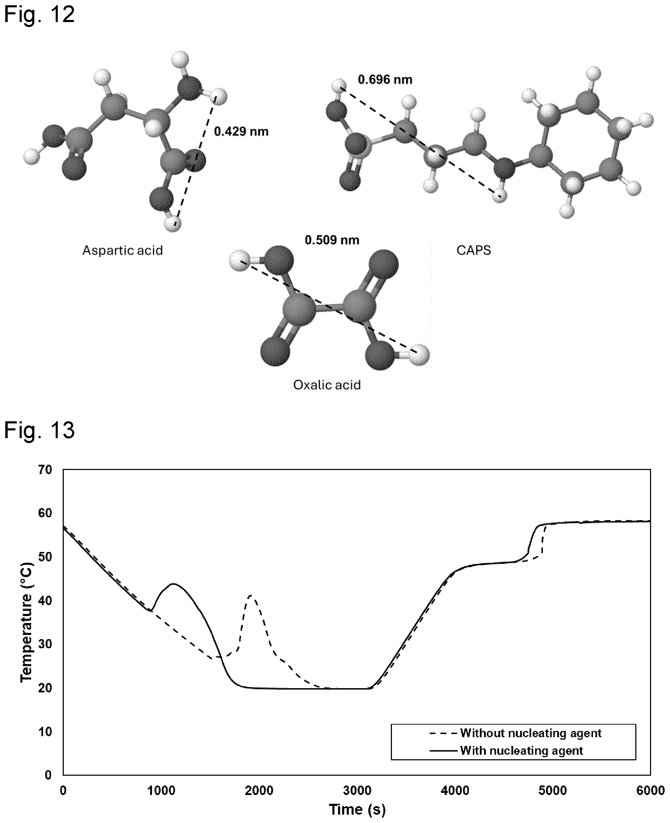

**Figures 12** shows the chemical structures of three solvents that did not work as eutectic components with SAT with their chelating distance being indicated.
**Figures 13** shows the a thermal cycles of the eutectic composition of SAT and Bicine, with two compositions one with DSP as a nucleation promoter and one without DSP, whereby the composition with DSP consists of 42.8wt.% sodium acetate, 31.2wt.% deionised water, 24wt.% Bicine and 2wt.% DSP (as a nucleation promoter) 46.6wt.% sodium acetate, 29.4wt.% deionised water, 24 wt.% Bicine and 2wt.% DSP and the composition without DSP consists of 45.8wt.% sodium acetate, 30.2wt.% of deionised water and 24 wt.% of bicine.

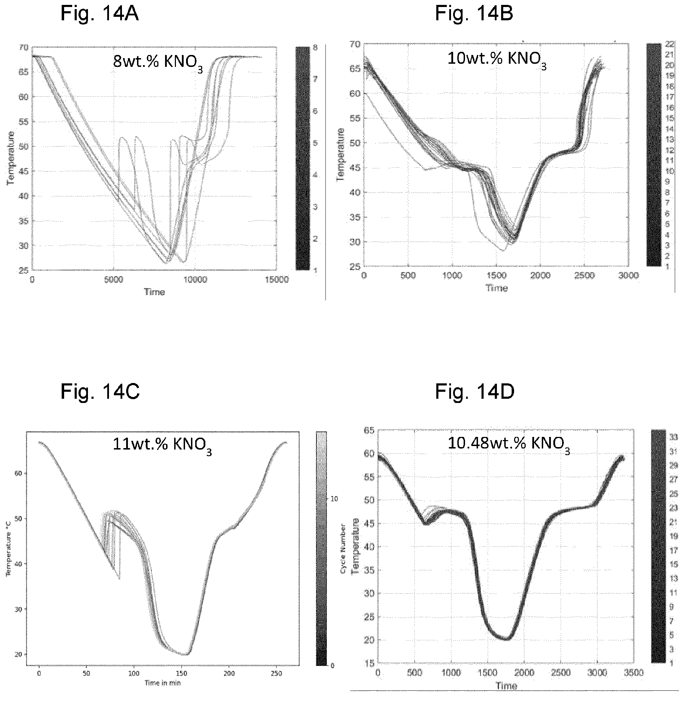

**Figures 14A to 14F** show thermal cycling results for an aqueous SAT PCM composition comprising 52,5wt.% of SAT, the indicated amounts of KNO₃ as eutectic salt component and 2wt.% as DSP as nucleation promotor, with the number of cycles indicated on the right of the graphs, wherein
**Figure 14A** shows thermal cycling of the SAT PCM composition comprising 8wt.% KNO₃;
**Figure 14B** shows thermal cycling of the SAT PCM composition comprising 10wt.% KNO₃;
**Figure 14C** shows thermal cycling of the SAT PCM composition comprising 11wt.% KNO₃;
**Figure 14D** shows thermal cycling of the SAT PCM composition comprising 10.48wt.% KNO₃;

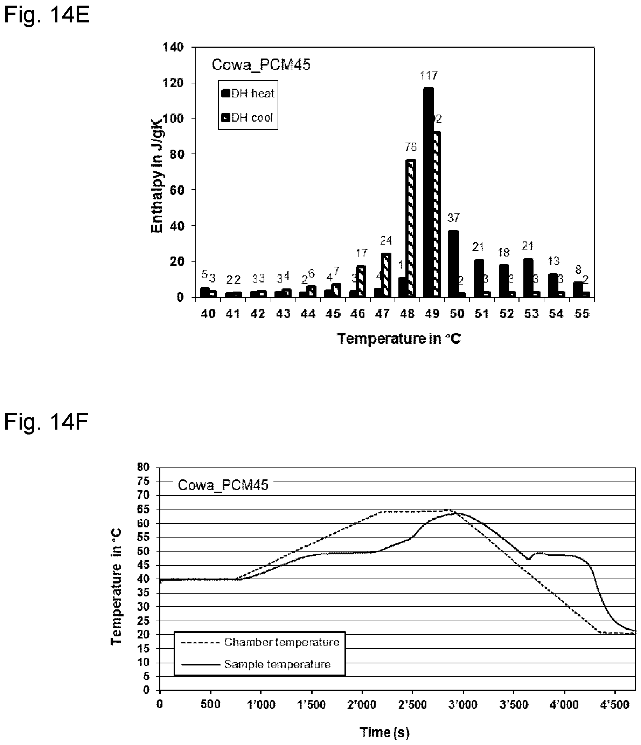

**Figures 14E and 14F** show 3D layer calorimetric measurements and specific heat capacity in J/(g K) results for a PCM composition 52.51 wt.% sodium acetate, 10.48wt.% KNO₃ and 2wt.% DSP as a nucleation promoter dissolved in deionized water, with Figure 14E showing a bar chart of the changes in enthalpy in during heating (black bars) and cooling (striped bars) and with Figure 14F showing the corresponding temperature profile of the SAT KNO₃ PCM composition during heating (solid line) and cooling (dashed line);

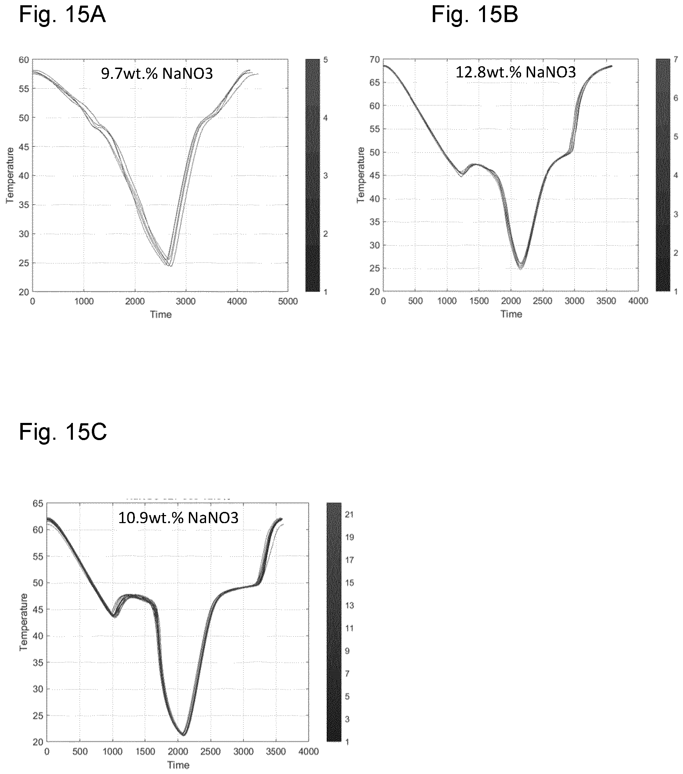

**Figures 15A to 15C** show thermal cycling results for an aqueous SAT PCM composition comprising 52,5wt.% of SAT, the indicated amounts of NaNO₃ as eutectic salt component and 2wt.% as DSP as nucleation promotor, with the number of cycles indicated on the right of the graphs, wherein
**Figure 15A** shows thermal cycling of the SAT PCM composition comprising 9.7wt.% NaNO₃;
**Figure 15B** shows thermal cycling of the SAT PCM composition comprising 12.8wt.% NaNO₃;
**Figure 15C** shows thermal cycling of the SAT PCM composition comprising 10.9wt.% NaNO₃.

### Examples of embodiments of the present invention

Sodium acetate trihydrate, NaOAc·3H₂O, also known as SAT, has a melting point at 58°C and is a used as a phase change material (PCM) which is particularly suited for building applications, as well as in water heating, cooling, or thermal storage system.

SAT PCMs are especially appealing due to their combination of high volumetric latent heat storage capacity, excellent thermal conductivity, and a well-defined melting point. Furthermore, these materials are widely accessible and relatively inexpensive.

To meet application-specific thermal demands, a PCMs should possess a transition temperature that falls within the application's operational range and exhibit high thermal conductivity for efficient heat transfer.

It is therefore desirable to provide mechanisms to adjust the transition temperature of the SAT PCM in order to broaden its range of possible uses and to meet specific requirements of the intended application.

The inventors set out to find a range of suitable melting temperature depressing agents which form eutectic solutions with SAT PCMs while maintaining a level of latent heat storage capacity, which allows for their continued use as PCM composition.

To this end, a series of solvents and salts were tested to identify suitable eutectics for SAT.

Figure 1 depicts a presentation of the acetate molecule of SAT using a molecular model. The two with hydrogen bond acceptor sites (A1, A2) of the acetate molecule are indicated by an arrow. The distance between the two hydrogen bond acceptor sites A1 and A2 is 0.228nm. This distance is also referred to as the "chelating distance" of the acetate molecule.

A selection of solvents which were tested are presented in Figure 2.

Of all the solvents tested, the following were identified as being suitable eutectic components for an SAT PCM composition: TRIS (Tris(hydroxymethyl)aminomethane), 1,1,1,Tris (1,1,1-Tris(hydroxymethyl)-ethane), erythriol, propylene glycol, tartaric acid, bicine (N,N-Bis-(2-hydroxyethyl)-glycine), tricine (*N*-[Tris-(hydroxymethyl)-methyl]-glycin), glycylglycin (Gly-Gly), ethylene glycol (1,2-Ethandiol), HEPES (4-(2-Hydroxyethyl)piperazine-1-ethanesulfonic acid), D-Sorbitol, Citric acid, Gallic acid, Caffeic acid, Allantoin, Sodium gluconate, N-Methyl-D-glucamine, L-Serine [, Xylose, and/or Maltose.

A closer analysis of the suitable and most efficient eutectic solvents for SAT revealed that each of the solvents comprises at least two hydrogen bond donor sites, and that the distance between two hydrogen donor sited was indicative of the performance as a eutectic for SAT PCM.

Without wishing to be bound by any particular hypothesis, it is postulated that a suitable eutectic solvent comprises two hydrogen bond donors which are suitably positioned in the solvent molecule to pair with the hydrogen bond acceptor sites of the acetate molecule of a cation acetate trihydrate (CAT) PCM. The formation of complexes between the solvent and the acetate molecules through two hydrogen bridges causes a lowering in the melting temperature of the CAT PCM composition. The strongest hydrogen-bonding results in the best melting point depression and the highest enthalpy of the CAT PCM.

The distance between the hydrogen bond donor sites of the solvent, i.e. the chelating distance of the hydrogen bond donors, should ideally match the chelating distance of the acetate molecule, i.e. 0.228nm, as closely as possible. Indeed, a chelating distance of the hydrogen donor sites from 0.170 nm to 400 nm, or 0.200nm to 0.370 nm in the solvent was identified as being suitable for forming a eutectic CAT composition.

Interestingly, it was found that the known SAT eutectic solvents urea, acetamide and glycine have two hydrogen bond donor sites positioned at a chelating distances of 0.228nm, 0.227nm and 0.241nm respectively. These distances correspond well with the distance of the hydrogen bond acceptor sites of the acetate molecule of SAT, thus further confirming the hypothesis.

It was observed that a close match in chelating distances resulted in higher enthalpy values, indicating a better latent heat storage capacity.

The addition of 1,1,1-Tris having a chelating distance of 0.238 nm as eutectic solvent resulted in about 220 J/g enthalpy of the SAT PCM solution. The addition of Bicine having a chelating distance of 0.226 nm as eutectic solvent resulted in about 230 J/g enthalpy of the SAT PCM solution. The addition of HEPES having a chelating distance of 0.228 nm as eutectic solvent resulted in about 240 J/g enthalpy of the SAT PCM solution.

The addition of TAPS having a chelating distance of 0.366 nm as eutectic solvent resulted in about 180 J/g enthalpy of the SAT PCM solution. The addition of Gly-Gly having a chelating distance of 0.337 nm as eutectic solvent resulted in about 200 J/g enthalpy of the SAT PCM solution.

However, the actual reduction of melting temperature was not directly dependent on the chelating distance but influenced by the actual melting point of each of the eutectic components.

Experimental results obtained for SAT PCM compositions comprising different eutectic solvents are shown in Figures 3A to 11C and discussed below.

Unless indicated otherwise, all SAT PCM compositions used in the subsequent experiments were prepared using an SAT PCM solution consisting of 60.3wt.% SA and 39.7wt.% H2O.
Figures 3A to 3G: show the results for an SAT PCM composition with TRIS as eutectic component

Figure 3A shows the molecular model of TRIS with the chelating distance indicated with the dashed line. The chelating distance is the distance between one hydroxyl hydrogen and one amine hydrogen, which is 0.273 nm.

Figure 3B shows DSC experiments with varying weight percentages of TRIS to SAT, ranging from 5wt.% (with 95wt.% SAT PCM solution whereby the ratio of SA to deionised water is 60.3 and 39.7 respectively therefore giving a total composition of 5wt.% TRIS, 57.3wt.% sodium acetate and 37.7 wt.% deionised water) to 45wt.% TRIS (with 55wt.% SAT whereby the ratio of SA to deionised water is 60.3:39.7 respectively therefore giving a total composition of 45wt.% TRIS, 33.2wt.% sodium acetate, 21.8wt.% deionised water). This gives an indication on the eutectic composition as enthalpy values for the same compositions obtained from DSC experiments. The eutectic point has highest enthalpy and in this case the enthalpy decrease from 5 wt.% to 20 wt.% TRIS and the increase at 25 wt.% indicates that the PCM composition is indeed a eutectic composition.

Figure 3D shows a bar chart recorded from the 3LC of the SAT TRIS45.2wt.% sodium acetate, 29.8wt.% deionised water and 25wt.% TRIS) mixture. It shows the main melting peak at 49°C and the main crystallisation peak at 46°C. The fact there is one main peak for the melting point and another peak for the crystallisation point is indicative that a eutectic composition is formed.

Figure 3E is the complimentary temperature profile of the 3LC experiment, in solid line showing the temperature of the SAT/TRIS sample and the dashed line showing the temperature programme of the reactor. This shows the crystallisation profile between time 220 min to 1200 min and the melting plateau between 1600 min and 2200 min. The long plateau length is also indicative that the eutectic point has been reached.

Figure 3F shows the long-term cycling of the SAT/TRIS PCM, containing 46wt.% sodium acetate, 29 wt.% deionised water, 25 wt.% Tris and 2wt.% DSP (As a nucleation promoter). The first cycle and the 100^{th} cycle of the SAT/Tris PCM can be observed, there is very little difference between the length of both the melting and the crystallisation plateau and onset crystallisation temperature. This suggests that the mixture is stable which is further indication that we are at the eutectic composition. If the composition were not a eutectic composition the material would destabilise into its separate components, i.e. SAT and TRIS, very quickly.

Figures 4A to 4C show the results for an SAT PCM composition with 1,1,1-Tris as eutectic component.

Figure 4A shows the molecular model of 1,1,1-Tris with the chelating distance indicated with the dashed line. The chelating distance is the distance between two hydroxyl hydrogens, and it has a chelating distance of 0.238 nm.

Figure 4B shows DSC experiments with varying weight percentages of 1,1,1-Tris to SAT ranging from 5wt.% (95wt.% SAT PCM solution whereby the ratio of SA to deionised water is 60.3_39.7 respectively therefore giving a total composition of 5wt.% 1,1,1-Tris, 57.3wt.% sodium acetate and 37.7 wt.% deionised water) to 50wt.% 1,1,1-Tris (50wt.% SAT PCM solution whereby the ratio of SA to deionised water is 60.3_39.7 respectively therefore giving a total composition of 50wt.% 1,1,1 Tris, 30.2wt.% sodium acetate and 19.9 wt.% deionised water). The decrease in enthalpy from 5 wt.% to 25 wt.% 1,1,1-Tris and the increases again at 30 wt.% 1,1,1-Tris is indicates that eutectic composition is formed.
Figures 5A to 5B show the results for an SAT PCM composition with Erythritol as eutectic component

Figure 5A shows the molecular model of erythritol with the chelating distance indicated with the dashed line. The chelating distance is the distance between two hydroxyl hydrogens, and it has a chelating distance of 0.274 nm.

Figure 5B shows DSC experiments with varying weight percentages of erythritol to SAT ranging from 5wt.% (95wt.% SAT PCM solution whereby the ratio of SA to deionised water is 60.3:39.7 respectively therefore giving a total composition of 5wt.% erythritol, 57.3wt.% sodium acetate and 37.7 wt.% deionised water) to 50wt.% erythritol (50wt.% SAT PCM solution whereby the ratio of SA to deionised water is 60.3_39.7 respectively therefore giving a total composition of 50wt.% erythritol, 30.2wt.% sodium acetate and 19.9 wt.% deionised water). This gives an indication on the eutectic composition as typically it is the local minimum, which is shown here at 20wt.% erythritol. However, enthalpy experiments demonstrated that the eutectic composition lies at 40 wt.% erythritol .

The discrepancy between the eutectic composition weight percentage done through melting point analysis and enthalpy analysis is due to the nature of the phase diagrams of salt hydrates combined with other melting point depression agents. Typically in ternary phase diagrams local minimums, named peritectic points, and a global minimum, which corresponds to the eutectic point, are present. The melting temperature is much more sensitive at picking up peritectic points, e.g. local minima, so when a decreased melting point is reached, the composition may be at a peritectic point. However, the enthalpy may not be as high because the composition is still not in its lowest molecular energy state, e.g. the eutectic point or the global minimum. Peritectic compositions are much more prone to destabilisation and are much more sensitive to external conditions. Therefore, it is more reliable to determine the enthalpy of the eutectic composition.

Figures 6A to 6C: show the results for an SAT PCM composition with propylene glycol as eutectic component.

Figure 6A shows the molecular model of propylene glycol with the chelating distance indicated with the dashed line. The chelating distance is the distance between two hydroxyl hydrogens, and it has a chelating distance of 0.324 nm.

Figure 6B shows DSC experiments with varying weight percentages of propylene glycol to SAT ranging from 5wt.% (95wt.% SAT PCM solution whereby the ratio of SA to deionised water is 60.3:39.7 respectively therefore giving a total composition of 5wt.% propylene glycol, 57.3wt.% sodium acetate and 37.7 wt.% deionised water) to 50wt.% propylene glycol (50wt.% SAT PCM solution whereby the ratio of SA to deionised water is 60.3:39.7 respectively therefore giving a total composition of 50wt.% propylene glycol, 30.2wt.% sodium acetate and 19.9 wt.% deionised water ). This gives an indication on the eutectic composition as typically it is the local minimum.

Figure 6C shows DSC results of these compositions for the enthalpy rather than the melting point. The eutectic point will have the highest enthalpy and in this case a decrease in enthalpy from 5 wt.% to 25 wt.% propylene glycol was observed, which increased again at 30 wt.% of propylene glycol, indicating that this is the eutectic composition.

Figures 7A to 7E: show the results for an SAT PCM composition with bicine as eutectic component.

Figure 7A shows the molecular model of Bicine with the chelating distance indicated with the dashed line. The chelating distance is the distance between one hydroxyl hydrogen and one amine hydrogen, and it has a chelating distance of 0.338 nm.

Figure 7B shows DSC experiments with varying weight percentages of Bicine to SAT ranging from 5wt.% (95wt.% SAT PCM solution whereby the ratio of SA to deionised water is 60.3:39.7 respectively therefore giving a total composition of 5wt.% Bicine, 57.3wt.% sodium acetate and 37.7 wt.% deionised water) to 45wt.% Bicine (55wt.% SAT PCM solution whereby the ratio of SA to deionised water is 60.3_39.7 respectively therefore giving a total composition of 55wt.% Bicine, 27.1wt.% sodium acetate and 17.9 wt.% deionised water). This gives an indication on the eutectic composition as typically it is the local minimum. Figure 7C shows DSC results for enthalpy rather than the melting point. The eutectic point has the highest enthalpy and here we see the enthalpy decrease from 5 wt.% to 23 wt.% Bicine and then it increases again at 24 wt.% which is indicative that this is the eutectic composition.

Figure 7D shows a bar chart recorded from the 3LC of the SAT Bicine mixture compromising 24wt.% Bicine, 45.8wt.% sodium acetate and 30.2 wt.% deionised water. It shows the main melting peak at 50°C and the main crystallisation peak at 44°C. The fact there is one main peak at the melting and the crystallisation peak is indicative it being at the eutectic composition.

Figure 7E is the complimentary temperature profile of the 3LC experiment, in solid line showing the temperature of the SAT/Bicine sample and the dashed line showing the temperature programme of the reactor. This shows the crystallisation profile between time 200 min to 600 min and the melting plateau between 1800 min and 2400 min. The long plateau length is also indicative that the eutectic point has been reached.

Figures 8A to 8C: show the results for an SAT PCM composition with tricine as eutectic component.

Figure 9A shows the molecular model of Tricine with the chelating distance indicated with the dashed line. The chelating distance is the distance between two hydroxyl hydrogens, and it has a chelating distance of 0.228 nm.

Figure 9B shows DSC experiments with varying weight percentages of Tricine to SAT ranging from 5wt.% (95wt.% SAT PCM solution whereby the ratio of SA to deionised water is 60.3:39.7 respectively therefore giving a total composition of 5wt.% Tricine, 57.3wt.% sodium acetate and 37.7 wt.% deionised water) to 50wt.% Tricine (50wt.% SAT PCM solution whereby the ratio of SA to deionised water is 60.3:39.7 respectively therefore giving a total composition of 50wt.% tricine, 30.2wt.% sodium acetate and 19.9 wt.% deionised water). This gives an indication on the eutectic composition as typically it is the local minimum, however from Figure 8C which also shows DSC results but from the enthalpy rather than the melting point. The eutectic point will have the highest enthalpy and here we see the enthalpy decrease from 5 wt.% to 15 wt.% Tricine and then it increases again at 20 wt.% which is indicative that this is the eutectic composition.

Figures 9A to 9I: show the results for an SAT PCM composition with glycylglycine (Gly-Gly) as eutectic component.

Figure 9A shows the molecular model of Glycylglycine with the chelating distance indicated with the dashed line. The chelating distance is the distance between two amine hydrogens, and it has a chelating distance of 0.377 nm.

Figure 9B shows DSC experiments with varying weight percentages of Glycylglycine to SAT ranging from 5wt.% (95wt.% SAT PCM composition whereby the ratio of SA to deionised water is 60.3:39.7 respectively therefore giving a total composition of 5wt.% Glycylglycine, 57.3wt.% sodium acetate and 37.7 wt.% deionised water) to 50wt.% Glycylglycine composition (50wt.% SAT PCM composition whereby the ratio of SA to deionised water is 60.3:39.7 respectively therefore giving a total composition of 50wt.% Glycylglycine, 30.2wt.% sodium acetate and 19.9 wt.% deionised water). This gives an indication on the eutectic composition as typically it is the local minimum

Figure 9C shows DSC results for the enthalpy of the same composition. The eutectic point was determined to be 22.5 wt.% which is indicative of the presence of a eutectic composition.

To confirm how the profiles and enthalpy changes with deviations from the eutectic composition, three three-layer experiments are shown. Figure 10D shows a bar chart of the 3LC with a ratio of SAT solution consisting of 54.3wt.% sodium acetate, 35.7wt.% deionised water and 10wt.% Glycylglycine and the bar chart indicating a wide range of melting temperatures (52°C-56°C).

This wide range was also observed in Figure 9E which shows the corresponding thermal profile of the 3LC. The meting plateau occurs between 1500 minutes and 2000 minutes. The plateau is not horizontal and indicates that the composition is not at the eutectic point.

Figure 9F shows a bar chart of the 3LC: containing 51.3wt.% sodium acetate, 33.7wt.% deionised water and 15wt.% Glycylglycine and the bar chart shows a wide range of melting temperatures (52°C-55°C), but not as wide as the composition containing 10wt.% Glycylglycine.

This can also be observed in Figure 9G which shows the corresponding thermal profile of the 3LC, whereby the meting plateau occurs between 1500 minutes and 2000 minutes. The plateau looks more horizontal than with 10wt.% Glycylglycine but towards the end some variations can be observed.

Figure 9H shows a bar chart of the 3LC containing 48.2wt.% sodium acetate, 31.8wt.% deionised water and 20wt.% Glycylglycine. This bar chart shows a narrower melting range, with the main melting peaks at 53°C and 54°C. The thermal profile accompanying the bar chart shows a straight plateau at the beginning of melting but then some variation towards the end. This is in line with the DSC experiments showing the composition containing 20 wt.% Glycylglycine is close to the eutectic point, but 22.5 wt.% Glycylglycine is the actual eutectic weight percentage of Glycylglycine as was discovered with the DSC experiments. However the changing 3LC profiles and narrowing of the profiles is an example of how the eutectic point can be determined using the 3LC.

Figures 10A to 10E: show the results for an SAT PCM composition with HEPES as eutectic component.

10A shows the molecular model of HEPES with the chelating distance indicated with the dashed line. The chelating distance is the distance between one hydroxyl hydrogen and one amine hydrogen, and it has a chelating distance of 0.338 nm.

Figure 10B shows DSC experiments with varying weight percentages of HEPES to SAT ranging from 5wt.% (95wt.% SAT PCM solution whereby the ratio of SA to deionised water is 60.3:39.7 respectively therefore giving a total composition of 5wt.% HEPES, 57.3wt.% sodium acetate and 37.7 wt.% deionised water) to 50wt.% HEPES (50wt.% SAT PCM solution whereby the ratio of SA to deionised water is 60.3:39.7 respectively therefore giving a total composition of 50wt.% Glycylglycine, 30.2wt.% sodium acetate and 19.9 wt.% deionised water ). This gives an indication on the eutectic composition as typically it is the local minimum which is at 20 wt.% HEPES.

Figure 10C also confirms this, which also shows DSC results but from the enthalpy rather than the melting point. The eutectic point will have the highest enthalpy and here we see the enthalpy decrease from 5 wt.% to 15 wt.% HEPES and then it increases again at 20wt.% which is indicative that this is the eutectic composition.

Figure 10D shows a bar chart recorded from the 3LC of the SAT PCM solution consisting of 48.2wt.% sodium acetate, 31.8wt.% deionised water and 20wt.% HEPES. It shows the main melting peak at 44°C. The fact there is one main melting peak is indicative of it being at the eutectic composition.

Figure 10E is the complimentary temperature profile of the 3LC experiment, in solid line showing the temperature of the SAT/HEPES sample and the dashed line showing the temperature programme of the reactor. This shows the melting plateau between 1500 min and 1600 min. -

Figures 11A to 11C: show the results for an SAT PCM composition with TAPS as eutectic component.

Figure 11A shows the molecular model of TAPS with the chelating distance indicated with the dashed line. The chelating distance is the distance between one hydroxyl hydrogen and one amine hydrogen and it has a chelating distance of 0.289 nm.

Figure 11B shows DSC experiments with varying weight percentages of TAPS to SAT ranging from 5wt.% (95wt.% SAT PCM solution whereby the ratio of SA to deionised water is 60.3:39.7 respectively therefore giving a total composition of 5wt.% TAPS, 57.3wt.% sodium acetate and 37.7 wt.% deionised water ) to 50wt.% TAPS (50wt.% SAT PCM solution whereby the ratio of SA to deionised water is 60.3:39.7 respectively therefore giving a total composition of 50wt.% TAPS, 30.2wt.% sodium acetate and 19.9 wt.% deionised water). The melting peak temperature decreases between 20wt.% and 30 wt.% TAPS indicating the eutectic lies within this range.

Figure 11C confirms that the mixture with 20wt.% has the highest enthalpy within this range and is therefore most likely the eutectic composition.

Figure 12 shows molecular models of solvents which did not work as eutectic solvents in the SAT PCM composition, with the chelating distance between the hydrogen bond donor sites indicated.

Figure 13 shows two samples of the SAT/Bicine eutectic composition one with the nucleation promoter DSP (solid line) and one without the nucleation promoter DSP (dashed line) in the thermal cycling set-up. The mixture with the DSP consists of 42.8wt.% Bicine, 31.2wt.% deionised water, 24wt.% Bicine and 2 wt.% DSP. The mixture without DSP consists of 45.8wt.% Bicine, 30.2wt.% deionised water and 24wt.% Bicine. Without the nucleating agent, which is DSP, the crystallisation onset temperature, or nucleation temperature is approximately 28°C, making the supercooling degree 21°K. When DSP is added, the crystallisation onset temperature is approximately 40°C with a supercooling degree of 9°K. This demonstrates how DSP helps to regulate the crystallisation onset temperature of the SAT/Bicine eutectic.

Even though not experimentally confirmed, it is expected that the other solvents with a suitable chelating distance are capable of forming eutectic compositions with CAT. These solvents include: D-sorbitol, having a chelating distance of 0.320 nm, citric acid having a chelating distance of 0.352 nm, gallic acid having a chelating distance of 0.322 nm, caffeic acid having a chelating distance of 0.323 nm, allantoin having a chelating distance of 0.218 nm, sodium gluconate having a chelating distance of 0.294 nm, N-methyl-D-glucamine having a chelating distance of 0.259 nm, L-serine having a chelating distance of 0.390 nm, xylose having a chelating distance of 0.244 nm, and maltose having chelating distance of 0.242 nm.

A series of solvents having a chelating distance larger than 400nm was also tested: oxalic acid having a chelating distance of 0.509 nm, lactic acid having a chelating distance of 0.444 nm, adipic acid having a chelating distance 1.0200 nm, aspartic acid having a chelating distance 0.426 nm, 3-(Cyclohexylamino)-1-propanesulfonic acid (CAPS) having a chelating distance 0.696 nm, and succinic acid having a chelating distance 0.764 nm. None of these solvents was capable of forming a eutectic solution with SAT PCM.

It was furthermore found that when salts were used at eutectic concentrations in the SAT PCM composition, a stable eutectic composition with a decreased melting point and a very reliable cycling behaviour was obtained. It is interesting to note that while salts were capable of lowering the melting point of the SAT PCM composition at other concentrations, the obtained SAT PCM composition were not stable and thus their cycling behaviour over repeated cycles was not reliably reproducible.

Complexing of the SAT component worked particularly well when eutectic salts with monovalent cations were provided in the SAT PCM composition.

Initially, the researchers set out to find suitable concentrations for salts which can be used as melting point depressors for SAT PCM compositions. KNO₃ was used in a first set of experiments.

The thermal cycling behaviour of a 4 wt.% KNO₃ SAT PCM composition (consisting of of 56.4wt.% sodium acetate, 37.6wt.% deionized water, 4 wt.% KNO3 and 2 wt.% DSP as a nucleation promoter) was investigated in more detail. It was observed that the 4 wt.% KNO₃ recipe did not crystallize in every cycle due to an absence of a crystallization plateau in each cycle. Additionally, as was concluded from the observed melting behaviour, that two small transitions occurred at 48°C and at 57°C. The appearance of two peaks at low concentrations suggests that the mixture might potentially form a eutectic at higher concentrations, which prompted further experiments to asses whether monovalent salts may indeed act as eutectic components in an SAT PCM composition.

Based in this initial observation which suggested a possible eutectic behaviour for the salt in the SAT-PCM composition, further investigations focused on finding an exact eutectic composition, confirming the speculated potential of simple salts as eutectic components for SAT PCM compositions.

An SAT PCM composition comprising 6 wt.% KNO₃ confirmed the behaviour observed in the initial experiments. While each cycle crystallized, the melting profiles clearly showed two distinct melting plateaus, one at 48°C and one that finished at approximately 54°C. This provided further evidence that a eutectic solution may be formed at the appropriate concentrations. At the same time, these results indicated, that a higher concentration of KNO₃ was required to arrive at the eutectic point.

Thermal cycling results obtained for an SAT PCM composition comprising 8wt.% KNO₃ are shown in Figure 14A.

The multiple lines in each of the Figures 14A to 14D, and in Figures 15A to 15C represent overlays of consecutive cycles. All cycles are shown in order to better visualize deviations between the individual cycles and thus destabilization of the SAT PCM compositions.

The sample comprising 8wt.% KNO₃ did not crystallize in each cycle, and the melting plateau has moved closer to 48°C with less melting plateau at higher temperatures. This suggested that the concentration is closer to the eutectic point, but the lack of nucleation suggested that the eutectic concentration was not reached yet.

In Figure 14B thermal cycles of an SAT PCM composition comprising 10wt.% KNO₃ are shown. Interestingly, with 10wt.% KNO₃ two crystallization plateaus were observed, one at 50°C and one at 45°C. Moreover, two melting plateaus were observed, one larger plateau at 48°C and one smaller plateau at 55°C. The fact that this second plateau at 55°C was getting smaller suggested the composition is close to its eutectic point.

To identify the eutectic concentration, an SAT PCM composition with 11 wt.% KNO₃ was tested (shown in Figure 14C). The 11wt.% KNO₃ sample contained 52.2wt.% sodium acetate, 11wt.% KNO₃ and 2 wt.% DSP dissolved in deionized water. The cycles for the 11 wt.% KNO₃ composition showed larger supercooling degrees and crystallization at lower temperatures than the previous concentrations. Additionally, the melting plateau changed yet again, indicating that too much KNO₃ was provided in the composition.

It was therefore speculated that the eutectic concentration of KNO₃ in the SAT PCM composition is between 10 wt.% and 11 wt.%.

This was confirmed when a 10.48wt.% KNO₃ SAT PCM composition was tested. The composition contained 52.51 wt.% sodium acetate, 10.48wt.% KNO3 and 2wt.% DSP (as a nucleation promoter) dissolved in deionized water.

As immediately evident from Figure 14D, both the crystallization and melting plateaus are extremely flat, with very little deviation across the preformed 33. Moreover, only one plateau is formed during both melting and crystallization process. The cures confirmed that a new eutectic SAT PCM composition was found. The composition was very stable without any change in plateau over 33 cycles, which is a typical feature of a eutectic composition. Further experiments confirmed a stable thermal cycling behaviour over at least 150 cycles of this eutectic composition.

Figure 14E shows the bar chart of a 3LC experiment of the eutectic composition of SAT + KNO₃ with DSP as nucleating agent. The eutectic composition consists of 52.51 wt.% of sodium acetate anhydrous, 35.01 wt.% deionised water, 10.48wt.% of potassium nitrate and 2 wt.% of DSP as a nucleating agent. The bar chart shows that the main melting peak is at 49°C and the main crystallisation peak is also at 49°C, the spread of the melting and crystallisation point is relatively small which indicates that we are at the eutectic composition.

Figure 14F shows the accompanying temperature profile of the 3LC experiments shown in Figure 14E. The melting plateau of the SAT KNO₃ PCM composition is extremely flat, with the melting occurring between 1200 minutes and 2200 minutes. The crystallisation is also relatively flat and occurs between 3700 minutes and 4200 minutes.

The inventors found however that not all potassium salts were equally effective as eutectic components for SAT PCM compositions.

When potassium acetate (CH₃COOK) was tested as a eutectic salt in a 2-16wt % SAT PCM composition, it was found that more than 12 wt.% of the salt had to be added to the composition to achieve a melting point depression. Even at these amounts, the enthalpy was below 160 J /g, indicating a very low latent heat storage capacity of the PCM.

It is possible that the bulkiness of the acetate group of the potassium salt sterically hinders the interaction of the potassium with the SAT component in the composition.

Without wishing to be bound to any particular theory, it is postulated that this efficacy is in fact due to the relatively weak electronegative nature of the acetate anion. Its capacity to pull electrons from the potassium ion in the salt is limited resulting in a potassium ion (K⁺) carrying a relatively weak positive charge. A weakly charged potassium ion may be less efficient in forming a complex with the acetate ion in the SAT component.

However, it was found that monovalent sodium salts, for example sodium nitrate (NaNO₃) were also very efficient for forming eutectic SAT PCM compositions.

Since lithium is highly toxic, eutectic potassium or sodium salts are a preferred choice in order to provide a more sustainable and environmentally friendly PCM.

An SAT PCM compositions comprising 8.5wt.% NaNO₃ has almost no crystallization plateau and no melting plateau, suggests that no relevant eutectic was formed at this concentration. When the NaNO₃ concentration was increased to 8.9wt.% a plateau was observed at approximately 46°C during crystallization and 48°C during melting. However, these plateaus were rather small. A slight variation in the crystallization behavior in the first 5 cycles of the thermal cycling experiments was observed. This indicates that destabilization already occurred after only 5 cycles.

At a NaNO₃ concentration of 9.7wt.% very small plateaus just below 50°C were observed, as shown in Figure 15A. The plateaus indicate a relatively small enthalpy and that the composition is not a real eutectic yet.

When the concentration was increased to 10.2wt.% NaNO3, the plateaus are wider, indicating a lot of enthalpy and potential to be for a eutectic composition. However, over the first 5 cycles a decrease in the melting plateau occurred, indicating a separation of the PCM material. The composition was thus not eutectic.

At 10.5wt.% NaNO₃ the SAT PCM composition was initially stable, however after approximately 12 cycles destabilization was observed. The eutectic point of the SAT NaNO₃ PCM composition was finally reached at 10.9wt.% NaNO3. At this concentration, the first 21 thermal cycles exhibited no change in the melting plateau length and very minimal changes in the crystallization plateau, as shown in Figure 15C. The plateau was relatively wide, which indicates a good enthalpy.

When concentrations were further increased, to 11.3 wt.% NaNO3 a destabilization was observed within 21 cycles through a shortening of the melting plateau.

Adding even more NaNO₃ to obtain a 12.8wt.% NaNO₃ SAT PCM composition resulted in a shortening of the melting plateau, which suggests that the eutectic point has been surpassed (Figure 15B).

It was therefore concluded that the eutectic NaNO₃ SAT PCM composition is reached at 10.9wt% NaNO₃. The composition contained 50.7wt.% sodium acetate, 36.4wt.% deionized water, 10.9wt% NaNO₃ and 2 wt.% DSP as a nucleation promoter.

This invention describes for the first time the use of HSSE at eutectic concentrations to produce SAT PCM compositions which are stable over extensive thermal cycling, i.e. for 50 cycles or more.

Different melting temperatures determined for several examples of eutectic SAT PCM compositions according to this invention are summarized in Table 1 below.

**Table 1: Melting temperatures of eutectic SAT PCM compositions.**

| **Material** | **Metling Point** |
|---|---|
| SAT / TRIS | 48°C |
| SAT /1,1,1-Tris | 44°C |
| SAT / Erythritol | 39°C |
| SAT / Propylene Glycol | 43°C |
| SAT / Bicine | 50°C |
| SAT / Tricine | 42°C |
| SAT / Glycylglycin | 43°C |
| SAT / HEPES | 44°C |
| SAT / TAPS | 41°C |
| SAT / KNO₃ | 47°C |
| SAT / NaNO₃ | 49°C |

### Experimental Results

### Example 1: Preparation of PCM formulations

### Sodium Acetate Trihydrate (SAT) PCM composition

The stabilizing polymer is dissolved in water and heated to 85°C until completely dissolved. The anhydrous sodium acetate was then mixed until fully dissolved, this results in the SAT PCM with the stabilising polymer.

In the case of the eutectic system, the water, sodium acetate anhydrous and eutectic component were all added into a flask at the indicated wt.% and heated and stirrer to 80 C until fully dissolved, this results in the eutectic SAT mixture. The same preparation procedure goes for the melting point depression samples. It should be noted that the ratio of sodium acetate and deionised water used for the formation of the eutectic systems including Tris, 1,1,1-Tris, erythritol, propylene glycol, Bicine, Tricine, Gly-Gly, HEPES and TAPS was always 60.3:39.7 respectively.

### SAT PCM with nucleation promoter

In compositions comprising the nucleation promoter DSP, the SAT PCM mixtures were prepared as described in the previous paragraphs and then cooled down below 65°C prior to adding 2wt.% of DSP. The reaction mixture was stirred for half an hour to remove any clumps and to prevent the formation of clumps.

### SAT PCM with expanded graphite and graphite flakes

For compositions comprising graphite, 9.5wt.% of expanded graphite having a mean particle size of 600µm was added to the SAT PCM composition before the optional addition of the nucleation promoter. The reaction mixture was stirred until smooth. At this point the expanded graphite network was formed within the SAT composition.

Once expanded graphite network was formed, 15wt.% of graphite flakes having a mean particle size of 500µm were added and the reaction mixture was stirred for another 60 minutes until the graphite flakes had incorporated into the expanded graphite network. It is important to allow the graphite flakes to incorporate into the expanded graphite network in order to prevent the flakes from forming sediments in the composition.

The stochiometric ratio of sodium acetate and water in sodium acetate trihydrate was 60.4 wt.% and 39.7 wt.% respectively. However, it was found that because of the ability of expanded graphite to attract water, more water had to be added to ensure the sodium acetate trihydrate did not dehydrate, therefore the ratio used was sodium acetate (60 wt.%) and water (40 wt.%).

### Example 2: Heat storage capacity - DSC calorimetry

The enthalpy-temperature relation determines the heat storage capacity of a PCM. This relation can be determined experimentally using calorimetric methods. A high enthalpy indicates a good latent heat storage capacity of the PCM.

To determine the enthalpy of the SAT PCM compositions, Differential Scanning Calorimetry (DSC) assays were performed.

DSC is a widely used method in thermal analysis. Using the DSC, melting temperatures and the enthalpies associated with such transformations can be determined precisely. The specific heat capacity of a given material can also be measured. These properties are critical when characterizing PCMs for thermal energy storage applications.

Phase transitions are always associated with a change in phase change enthalpy and the working principle of DSC-analysis is based on the determination of this enthalpy. In order to test the SAT PCM compositions comprising different candidates for eutectic components, including their melting temperatures and enthalpies of fusion, the samples are subjected to thermal testing in the DSC.

The working principle of the DSC is that the sample is inserted into the DSC alongside a thermally inert reference substance, for example Quartz, and both samples are subjected to a time-linear temperature program, where both increases and decreases in the temperature are permittable. The DSC3+ calorimeter (Mettler Toledo, Columbus, OH, USA), which according to the manufacturer has an uncertainty in enthalpy of ± 8%, was used for all experiments of this study. In the experiments performed in this study 5-20 ± 0.0005 mg of each sample was provided for DSC measurements. Both, the reference sample and the sample to be tested, were subjected to the same thermal profile inside a heating and cooling chamber.

The samples were measured using two oppositely-switched thermocouples, one inserted into the sample to be tested and the other one inserted into the thermally inert reference. The resulting thermoelectric voltage is proportional to the heat flow of the sample.

The change in enthalpy of the tested sample was determined based on the temperature difference between the tested sample and the thermally inert reference sample using the following energy balance equation: $\frac{dq}{dt} = \frac{1}{R} \left({\sum }_{i = 1}^{N} {\left({ΔT}_{S 0}\right)}_{i}-{\sum }_{i = 1}^{N} {\left({ΔT}_{R 0}\right)}_{i}\right)$

The phase change enthalpy was determined by integration of the heat flow over a defined period of time, wherein the material was heated at a rate of 2 K min⁻¹.

### Example 3: PCM material and heat storage capacity - 3-layer calorimetry

Measurement devices for determining the heat storage capacity of PCMs are usually based on small sample sizes, typically between 5µg and 10µg, which can be inaccurate when the sample has either a low thermal conductivity, a high thermal capacity over a small temperature range, or is inhomogeneous.

The 3-layer calorimetric method, which is well known in the art, addresses this issue and permits accurate measurement of larger sampling sizes. As an additional advantage, 3-layer calorimetry is a non-intrusive measurement methodology, permitting for subsequent use of the measured samples in further tests. It was therefore chosen as the appropriate method to determine heat capacity of SAT PCM compositions with or without different potential eutectic components. The calorimeter was calibrated using substances with known enthalpy distributions.

To determine the heat storage capacity, the required temperature profile corresponding to the sample PCM composition was programmed into a standard climatic test cabinet inside of which a commercial 3-layer calorimeter measuring device (w&a Wärme und Anwendungstechnische Prüfungen) was positioned. SAT PCM compositions were cycled between 35°C and 65°C. A heating rate of 0.3 Kmin⁻¹ was applied to the samples, which were provided at 100 g each. This large quantity of the sample reduced the impact of weighing tolerance deviations and permitted the correct measurement for SAT PCMs which contain potential eutectic components.

### Example 4: Repeated thermal cycling

To test the durability of the PCM compositions, different compositions were submitted to repeated thermal cycles in the thermal cycling set-up.

The samples were subjected to repeated heating and cooling of the surrounding water and the temperature of the PCM compositions was continuously measured throughout these cycles.

## Claims

1. A phase change material composition comprising
- a cation acetate trihydrate (CAT) phase change material (PCM) component, for example a sodium acetate trihydrate (SAT) PCM component, a copper acetate trihydrate (CuAT) PCM component, or a methylammonium acetate trihydrate (MAAT) PCM component, and
- a eutectic component, which is
∘ a eutectic solvent comprising at least two hydrogen bond donor sites being positioned at a distance ranging from 0.170 nm to 0.400 nm, or 200 nm to 350 nm from one another, said depressing solvent not being urea, acetamide or glycine,
or
∘ a hydrated simple salt eutectic (HSSE) component.

2. The phase change material composition according to claim 1, wherein the eutectic component is present in the composition at a eutectic concentration, or at a concentration within 20%, within 10%, or within 5% from the eutectic concentration.

3. The phase change material composition according to claim 1 or 2, comprising a eutectic component which is a solvent selected from a group consisting of TRIS (Tris(hydroxymethyl)aminomethane), 1,1,1,TRIS (1,1,1-Tris(hydroxymethyl)-ethane), Erythriol, Propylene glycol, Tartaric acid, Bicine (N,N-Bis-(2-hydroxyethyl)-glycine), Tricine (N-[Tris-(hydroxymethyl)-methyl]-glycin), Glycylglycin (Gly-Gly), Ethylene glycol (1,2-Ethandiol), HEPES (4-(2-Hydroxyethyl)piperazine-1-ethanesulfonic acid), D-Sorbitol Citric acid, Gallic acid, Caffeic acid, Allantoin, Sodium gluconate, N-Methyl-D-glucamine, L-Serine, Xylose, Maltose.

4. The phase change material composition according to any of claims 1 to 3 comprising 20wt.% to 30wt.%, for example 25wt.% TRIS, 25wt.% to 35wt.%, for example 30wt.% 1,1,1,TRIS, 35wt.% to 45wt.%, for example 40wt.% Erythritol, 20wt.% to 35wt.%, for example 30wt.% Propylene glycol, 15wt.% to 30wt.%, for example 24wt.% Bicine, 5wt.% to 30wt.%, for example 20wt.% Tricine, 5wt.% to 25wt.%, for example 20wt.% Glycylglycin, 15 wt.% to 25 wt.%, for example 20wt.% HEPES.

5. The phase change material composition according to claim 1 or 2, being an SAT PCM composition comprising a HSSE which is potassium nitrate (KNO₃) present at 10wt.% to 11wt.%, for example at 10,5wt.%, or comprising a HSSE which is sodium nitrate (NaNO₃) present at 10.5wt.% to 11.2wt.%, for example at 10.9wt.%.

6. The phase change material composition according to any of claims 1 to 5, comprising one or more suitable nucleation promoters, for example one or more nucleation promoters independently selected from disodium hydrogen phosphate (DSP) and hydrated forms thereof, tetrasodium pyrophosphate (TSPP) and hydrated forms thereof, titanium oxide (TiO2) and mixtures thereof.

7. The phase change material composition according to any of claims 1 to 6, comprising one or more stabilising polymer selected a general formula 1 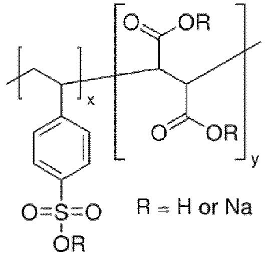
wherein R is either hydrogen or sodium,
or a general formula 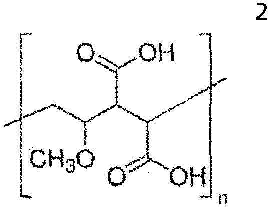
or a general formula 3 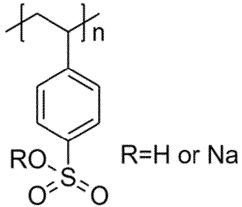
wherein R is either hydrogen or sodium,
or a mixture of polymers comprising a polymer having a general formula 1, a polymer having a general formula 2 and/or a polymer having a general formula 3.

8. The phase change material composition according claim **7,** wherein the total amount of stabilising polymer is present at 0.5wt.% to 10wt.%, preferably 1wt.% to 4wt.% on the composition.

9. The phase change material composition according to any of claims 1 to 8, comprising thermo-conductive particles, for example graphite flakes, and/or comprising expanded graphite.

10. The phase change material composition according to claim 9, wherein the expanded graphite is present in the PCM composition at 5wt.% to 12wt.%, for example at 6wt.% to 9wt.%.

11. The phase change material composition according to claim 9 or 10, wherein the thermo-conductive particles are present in the composition at 5wt. % to 50 wt. %, or at 10wt.% to 40wt.%, or at 15wt. % to 30wt.%.

12. The phase change material composition according to any of claims 1 to 11, having a melting temperature of less than 54°C, for example 40°C to 54°C, for example 45°C.

13. The phase change material composition according to any of claims 1 to 12, being a hydrogel.

14. A process for preparing a phase change material composition, comprising mixing an aqueous solution comprising a cation acetate trihydrate (CAT) phase change material component with a eutectic component which is a eutectic solvent comprising at least two hydrogen bond donor sites being positioned at a distance of 0.170 nm to 0.400 nm, or of 200 nm to 370 nm from one another, said depressing solvent not being urea, acetamide or glycine.

15. A device for heat storage or heat transfer comprising the composition of any of claims 1 to 13, or a composition obtainable by the process of claim 14.
